# EUROPÄISCHE PATENTSCHRIFT

(11) **EP 3 966 064 B1**
(45) Veröffentlichungstag und Bekanntmachung des Hinweises auf die Patenterteilung: **20.11.2024**
(21) Anmeldenummer: 20726373.2
(22) Anmeldetag: 13.05.2020
(51) Int. Cl.: B60K 35/10

(54) **VERFAHREN ZUM BETREIBEN EINES BEDIENSYSTEMS IN EINEM FAHRZEUG UND BEDIENSYSTEM IN EINEM FAHRZEUG**
METHOD FOR OPERATING AN OPERATING SYSTEM IN A VEHICLE AND OPERATING SYSTEM IN A VEHICLE
PROCÉDÉ POUR FAIRE FONCTIONNER UN SYSTÈME DE COMMANDE UTILISATEUR DANS UN VÉHICULE ET SYSTÈME DE COMMANDE UTILISATEUR DANS UN VÉHICULE

(30) Priorität: 08.07.2019 DE 102019210009
(43) Veröffentlichungstag der Anmeldung: 16.03.2022
(73) Patentinhaber: VOLKSWAGEN AKTIENGESELLSCHAFT, 38440 Wolfsburg (DE)
(72) Erfinder: KASSNER, Astrid, 10117 Berlin (DE)
(86) Internationale Anmeldenummer: PCT/EP2020/063394
(87) Internationale Veröffentlichungsnummer: WO 2021/004682

(56) Entgegenhaltungen:
- EP-A1- 2 927 791
- EP-A1- 3 015 306
- WO-A1-2011/026564
- US-B2- 8 659 658

## Beschreibung

Die vorliegende Erfindung betrifft ein Verfahren zum Betreiben eines Bediensystems in einem Fahrzeug sowie ein Bediensystem in einem Fahrzeug.

Der moderne Alltag ist durch eine Vielzahl von Einrichtungen geprägt, deren Bedienung in verschiedenen Kontexten auf unterschiedliche Weisen erfolgen kann. Hierzu wurden verschiedene Bedienkonzepte vorgeschlagen, beispielsweise eine Steuerung mittels Tastaturen, Gesten, Sprache oder Zeigergeräten, die je nach Einsatzgebiet spezifische Vor- und Nachteile aufweisen. In manchen Fällen können zudem zum Erzielen der gleichen Systemreaktion verschiedene Bedienmodalitäten vorgesehen sein, die ein Nutzer kennen und zwischen denen er sich entscheiden muss.

Bei bekannten Bediensystemen zeigt sich häufig das Problem, dass diese nur für bestimmte Bedienmodalitäten ausgelegt sind. Ein Nutzer kann daher nur erschwert auf vielfältigere Bedienmöglichkeiten zugreifen und diese zur Bedienung nutzen.

In der US 2015/0175172 A1 wird ein System für gestenbasierte Eingaben mit einer haptischen Rückmeldung beschrieben. Es wird eine Geste erfasst und eine entsprechende Rückmeldung ausgegeben. Zudem kann auch eine Sprachsteuerung erfolgen. Es werden verschiedene Gesten beschrieben, die mittels einer Kamera erfasst werden können und die verschiedenen steuerbaren Aktionen des Systems zugeordnet sind.

Aus der US 2004/0189720 A1 ist eine Architektur zum Steuern eines Computers mittels Gesten bekannt, bei der Gesten in Kombination mit Sprachbefehlen verwendet werden können.

Die DE 10 2009 039 114 A1 schlägt eine Bedienvorrichtung für ein Fahrzeug vor, bei der ein Körperteil eines Nutzers in einem von drei Raumbereichen detektiert und bei einem grafischen Objekt ein zugeordnetes Objekts angezeigt wird. Beispielsweise können eine Zahl und eine Skala angezeigt werden.

Die US 2018/0307347 A1 beschreibt ein Verfahren zum Detektieren von Gesten, wobei ein kapazitiver Sensor verwendet wird. Der Nutzer kann in einer Datenbank für bestimmte Kommandos Gesten definieren sowie vorgegebene Gesten durch Betrachten einer Anleitung erlernen.

Aus der DE 10 2006 037 156 A1 ist ein Verfahren zum Betreiben einer interaktiven Bedienvorrichtung bekannt, bei dem ein Bedienelement angezeigt und eine Annäherung eines Nutzers an das Bedienelement detektiert wird. Das Bedienelement wird dann optimiert dargestellt, etwa indem es vergrößert wird. Die Anpassung der Darstellung kann zudem mittels einer Geste gesteuert werden.

Die US 8 659 659 B2 offenbart ein Verfahren zum Betreiben eines Bediensystems in einem Fahrzeug, bei dem eine Ausgabe mit zumindest einem ersten Bedienobjekt erzeugt und in einem Ausgabebereich ausgegeben wird; wobei das erste Bedienobjekt einem ersten Element einer ersten Hierarchieebene eines hierarchisch geordneten Datenbestands zugeordnet ist; eine Bediengeste erfasst wird, wobei die erfasste Bediengeste eine Bewegungsrichtung eines Betätigungsobjekts senkrecht zu dem Ausgabebereich umfasst; und die Ausgabe in Abhängigkeit von der Bewegungsrichtung der Bediengeste so verändert wird, dass das erste Bedienobjekt durch ein zweites Bedienobjekt ersetzt wird; wobei das zweite Bedienobjekt einer zweiten Hierarchieebene des hierarchisch geordneten Datenbestands zugeordnet ist.

Der vorliegenden Erfindung liegt die Aufgabe zugrunde, ein Verfahren zum Betreiben eines Bediensystems und ein Bediensystem bereitzustellen, die einem Nutzer eine besonders einfache und schnelle Bedienung ermöglichen, insbesondere wenn die Bedienung mittels verschiedener Bedienmodalitäten erfolgen kann.

Erfindungsgemäß wird diese Aufgabe durch ein Verfahren mit den Merkmalen des Anspruchs 1 und ein Bediensystem mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren zum Betreiben eines Bediensystems in einem Fahrzeug wird eine Ausgabe mit zumindest einem ersten Bedienobjekt erzeugt und in einem Ausgabebereich ausgegeben. Dabei ist das erste Bedienobjekt einem ersten Element einer ersten Hierarchieebene eines hierarchisch geordneten Datenbestands zugeordnet. Eine Bediengeste wird erfasst, wobei die erfasste Bediengeste eine Bewegungsrichtung eines Betätigungsobjekts senkrecht zu dem Ausgabebereich umfasst, und die Ausgabe wird in Abhängigkeit von der Bewegungsrichtung der Bediengeste so verändert, dass das erste Bedienobjekt durch ein zweites Bedienobjekt ersetzt wird. Dabei wird beim Verändern der Ausgabe eine Bewegung des ersten Bedienobjekts in die Bewegungsrichtung der Bediengeste perspektivisch ausgegeben. Dabei ist das zweite Bedienobjekt einer zweiten Hierarchieebene des hierarchisch geordneten Datenbestands zugeordnet. Wobei beim Verändern der Ausgabe eine Bewegung des ersten Bedienobjekts in die Bewegungsrichtung der Bediengeste perspektivisch ausgegeben wird; und wobei mittels der Bediengeste eine virtuelle Anordnung des ersten Bedienobjekts räumlich verschoben wird.

Dies ermöglich vorteilhafterweise eine besonders einfache und intuitive Bedienung mittels Bediengesten und ein schnelles Auffinden einer gewünschten Position innerhalb mehrerer Hierarchieebenen.

Bei dem Verfahren wird zunächst ein Bedienobjekt erzeugt, das auf an sich bekannte Weise etwa als Widget, Fenster oder grafisches Objekt wie ein Icon oder Symbol ausgebildet und auf einer Anzeigefläche ausgegeben werden kann. Ein Bedienobjekt ist insbesondere ein bedienbares Element. Es kann alternativ oder zusätzlich der Ausgabe von Informationen dienen. Das Bedienobjekt kann beispielsweise als grafisches Element einer Anzeige ausgebildet sein und einen Bereich einer Anzeigefläche definieren, in dem eine Betätigung zu einer Bedienung des Bedienobjekts führt. Die Betätigung kann beispielsweise durch Berühren eines Touchscreens mittels eines Betätigungsobjekts in dem Bereich des Bedienobjekts oder durch eine Betätigung mittels eines Zeigerinstruments, etwa eines durch eine Maus oder eine ähnliche Vorrichtung gesteuerten Cursors, erfolgen. Ferner kann in diesem Fall eine Betätigung mittels einer Geste erfolgen, wobei keine Berührung eines Touchscreens oder einer Eingabeeinrichtung erforderlich sein muss, etwa mittels einer Zeige- und Betätigungsgeste.

Das Bedienobjekt ist dabei einer Hierarchieebene eines hierarchisch geordneten Datenbestands zugeordnet. Ein solcher Datenbestand umfasst insbesondere Datenobjekte wie Dateien oder Datensätze, die etwa in einer Ordnerstruktur hierarchisch organisiert sind. Dazu können beispielsweise Mediendateien, Daten über Radiosender, Kalendereinträge oder Adressdaten gehören. Ferner kann ein Bedienmenü einer Bedienoberfläche hierarchisch organisiert sein, wobei einzelne Menüs innerhalb der Menüstruktur als Objekte eines hierarchisch organisierten Datenbestands verstanden werden. Der Datenbestand ist so geordnet, dass seine Datenobjekte jeweils Hierarchieebenen zugeordnet sind. Diese wiederum sind relativ zueinander über- und untergeordnet.

Die Ausgabe des Bedienobjekts erfolgt in einem Ausgabebereich auf an sich bekannte Weise. Der Ausgabebereich kann beispielsweise eine Anzeigefläche einer Anzeigevorrichtung umfassen, etwa ein Display oder einen Touchscreen. Der Ausgabebereich kann ferner im dreidimensionalen Raum ausgebildet sein, insbesondere bei einer holographischen Ausgabe. Auch mittels einer autostereoskopischen Ausgabevorrichtung kann eine Ausgabe so erzeugt werden, dass das Bedienobjekt dreidimensional im Raum erscheint. Die zur Ausgabe verwendete Vorrichtung kann dabei fest im Fahrzeug angeordnet oder als fahrzeugexternes oder trennbar mit dem Fahrzeug verwendbares Gerät implementiert werden.

Bei dem Verfahren wird zudem eine Bediengeste erfasst, was auf an sich bekannte Weise erfolgen kann. Unter einer "Geste" wird insbesondere eine bestimmte Position und Ausrichtung, das heißt eine Pose eines Betätigungsobjekts, etwa einer Hand eines Nutzers, oder eine bestimmte Bewegung, die mit dem Betätigungsobjekt ausgeführt wird, verstanden. Gesten können nach an sich bekannter Art ausgestaltet sein. Sie umfassen insbesondere Zeigegesten, Wischgesten und solche Gesten, die im alltäglichen Gebrauch verwendet werden, zum Beispiel Handdrehungen, Greifgesten und Kombinationen mehrerer solcher gegebenenfalls unmittelbar kurz nacheinander ausgeführter Gesten. Die Gesten werden in einem Erfassungsraum ausgeführt. Dieser kann in einem räumlichen Bezug zu einer bestimmten Einrichtung stehen, etwa eine Ausgabevorrichtung, und kann beispielsweise an diesen angrenzen. Eine Geste kann ferner eine Annäherung an eine bestimmte räumliche Position, etwa eine Einrichtung oder eine Position auf einer Anzeigefläche, umfassen. Durch eine Gestenbedienung wird dem Nutzer eine besonders einfache und intuitive Bedienmöglichkeit bereitgestellt.

Anhand einer Geste kann ferner eine Richtung im Raum ermittelt werden und in Abhängigkeit von der ermittelten Richtung kann insbesondere eine Position bestimmt werden, für die eine Zeigegeste bestimmt wird. Zum Beispiel kann der Nutzer auf einen Punkt in einem Anzeigebereich zeigen und dadurch eine Auswahl durchführen. Anschließend kann eine Auswahl eines grafischen Objekts visualisiert werden, wenn das grafische Objekt in einem vorbestimmten Umgebungsbereich um den berechneten Punkt liegt. Hierdurch kann das grafische Objekt durch Zeigen ausgewählt werden. Eine Visualisierung der Auswahl eines grafischen Objekts hat den Vorteil, dass der Nutzer unmittelbar eine Rückkopplung zu seiner Bedienaktion erhält. Dabei kann der Punkt im Anzeigebereich auch dann visualisiert werden, wenn noch kein Objekt in dem Umgebungsbereich um den Punkt identifiziert wurde. Dies vermeidet, dass der Nutzer zwischen den Objekten im Leeren suchen muss, bis er das gewünschte grafische Objekt getroffen hat. Dies kann das Auswahlverfahren weiter beschleunigen.

Die Erfassung einer Geste kann etwa berührungslos durch ein Kamerasystem erfolgen, welches zeitlich aufgelöste Videodaten aus dem Detektionsraum aufnimmt und mittels einer angeschlossenen Analyseeinheit die erfassten Nutzerbewegungen bestimmten Gesten zuordnet. Alternativ oder auch zusätzlich kann eine Geste mittels resistiver und/oder kapazitiver Flächen erfasst werden.

Bei der Erfindung umfasst die Bediengeste eine Bewegungsrichtung eines Betätigungsobjekts senkrecht zu dem Ausgabebereich. Im Sinne der Erfindung wird dies so verstanden, dass die Bewegungsrichtung nicht parallel oder mit gleichbleibenden Abstand zu dem ausgegebenen Bedienobjekt verläuft, sondern dass sich das Betätigungsobjekt beispielsweise auf das Bedienobjekt zu oder von diesem weg bewegt. Die Bewegungsrichtung verläuft insbesondere mit einer Richtung Komponente senkrecht zu einer Anzeigeebene, in der eine Anzeigefläche angeordnet ist.

Bei einer Ausbildung des erfindungsgemäßen Verfahrens wird die Bewegung des ersten Bedienobjekts beim Verändern der Ausgabe in einer dreidimensionalen Darstellung ausgegeben. Dadurch wird vorteilhafterweise eine besonders deutliche und leicht erfassbare Darstellung erreicht.

Die Bewegung des ersten Bedienobjekt wird perspektivisch ausgegeben und entspricht der Bewegungsrichtung der Bediengeste. Die perspektivische Ausgabe kann auf an sich bekannte Weise erzeugt werden. Das erste Bedienobjekt wird bewegt so dargestellt, dass seine Bewegungsrichtung im Wesentlichen der Bewegungsrichtung der Bediengeste entspricht. Das erste Bedienobjekt kann sich dabei simultan zu der Bediengeste in die gleiche Richtung bewegen, wobei die dargestellte Bewegung des Bedienobjekts proportional zu oder gleich der tatsächlichen Bewegung des Betätigungsobjekts ist. Das Bedienobjekt kann sich beispielsweise mit der gleichen oder einer optionalen Geschwindigkeit bewegen oder der bei der Bewegung zurückgelegte Weg kann gleich oder proportional zu dem von dem Betätigungsobjekt zurückgelegten Weg sein.

Eine dreidimensionale Darstellung kann auf an sich bekannte Weise erzeugt werden, etwa durch zweidimensionales Darstellen eines Projektion eines virtuellen Objekts in einem virtuellen dreidimensionalen Raum. Die Ausgabe kann ferner mittels einer holografischen oder autostereoskopischen Darstellung erfolgen, durch die das Bedienobjekt im dreidimensionalen Raum erscheint.

Bei einer weiteren Ausbildung des Verfahrens ist das zweite Bedienobjekt in Abhängigkeit von der Bewegungsrichtung der Bediengeste einer übergeordneten oder einer untergeordneten Hierarchieebene relativ zu der Hierarchieebene des ersten Bedienobjekts zugeordnet. Dadurch kann vorteilhafterweise besonders einfach zwischen den Hierarchieebenen gewechselt werden.

Es wird insbesondere bestimmt, ob die Bewegungsrichtung einer Bediengeste eine Richtungskomponente auf den Ausgabebereich zu oder von ihm weg umfasst. Beispielsweise wird bei einer Bewegung von dem Ausgabebereich weg ein zweites Bedienobjekt einer untergeordneten Hierarchieebene ausgegeben. Beispielsweise ist eine solche Bediengeste analog zu einem "Heranholen" oder "Heranziehen" zum Nutzer hin ausgebildet. Umgekehrt kann bei einer Bewegung zum Ausgabebereich hin ein zweites Bedienobjekt einer übergeordneten Hierarchieebene ausgegeben werden. Beispielsweise ist eine solche Bediengeste analog zu einem "Wegschieben" oder "Abweisen" vom Nutzer weg ausgebildet. Analog dazu können auch weitere Komponenten der Bewegungsrichtung ausgewertet werden, etwa wenn eine Bewegungskomponente nach unten oder oben, rechts oder links verläuft, und die zweite Hierarchieebene und/oder das auszugebende zweite Bedienobjekt kann in Abhängigkeit von dieser Richtungskomponente bestimmt werden.

Insbesondere erfolgt der Wechsel der Ausgabe ausgehend von einer bestimmten Hierarchieebene zu einer hierarchisch direkt darüber beziehungsweise darunter angeordneten Hierarchieebene. Ferner kann in Abhängigkeit vom Typ der Bediengeste auch ein Übergang zu einer Hierarchieebene vorgenommen werden, die in der hierarchischen Struktur weiter als eine Ebene von der Hierarchieebene des ersten Bedienobjekts entfernt ist; beispielsweise kann eine bestimmte Bediengeste erkannt und der Bediengeste eine Anzahl von zu überspringenden Hierarchieebenen zugeordnet werden, oder es kann bei einer bestimmten "Shortcut"-Bediengeste zu einer bestimmten Hierarchieebene gewechselt werden, etwa einer obersten Hierarchieebene. Auf diese Weise kann besonders schnell durch die hierarchische Struktur navigiert und ein bestimmtes Bedienobjekt gefunden werden.

Bei einer weiteren Ausbildung umfasst die Ausgabe zumindest zwei erste Bedienobjekte, die der gleichen Hierarchieebene zugeordnet und in einer Reihe angeordnet sind. Dadurch können mehrere Elemente einer Hierarchieebene vorteilhafterweise besonders übersichtlich und leicht auffindbar ausgegeben werden.

Insbesondere sind sämtliche der gleichen Hierarchieebene zugeordnete Bedienobjekte jeweils in einer Reihe angeordnet. Die Reihe kann dabei horizontal, vertikal oder in eine andere Richtung verlaufen, wobei die Bedienobjekte jedoch entlang einer geraden Linie angeordnet sind.

Die Reihe kann so ausgebildet sein, dass sie nach Art eines Bandes verläuft, beispielsweise über eine Anzeigefläche hinweg. Ferner können die Bedienobjekte einer Hierarchieebene entlang einer virtuellen räumlichen Struktur angeordnet sein, etwa entlang eines ringförmigen Verlaufs, wobei die Bedienobjekte verschiedener Hierarchieebenen entlang hintereinander und beispielsweise konzentrisch angeordneter Strukturen angeordnet sind. Die Anordnung kann etwa entlang einer virtuellen Walzenoberfläche oder nach Art eines Karussells ausgebildet sein.

Beispielsweise wird bei der Veränderung der Ausgabe von dem ersten zu dem zweiten Bedienobjekt eine Verschiebung der Anordnung so dargestellt, dass sich die virtuelle Perspektive auf die Anordnung der Bedienobjekte verschiedener Hierarchieebenen verändert. Zum Beispiel sind die ersten und zweiten Bedienobjekte entlang von Ringen angeordnet, die zueinander konzentrisch verlaufen und denen jeweils eine Hierarchieebene zugeordnet ist. Bei weiteren Beispielen kann die Anordnung statt konzentrische Ringe auch entlang konzentrischer Walzenoberflächen oder Oberflächen einer Karussellanordnung erfolgen.

Der Nutzer kann die Bediengeste so ausführen, dass er beispielsweise eine Schiebegeste in Richtung des Ausgabebereichs ausführt und die dort dargestellte Anordnung der Bedienobjekte ebenso vom Nutzer weg verschoben wird. Auf diese Weise gelangen die zweiten Bedienobjekte eines weiter außen liegenden Rings zur Anzeige, während die zunächst dargestellten ersten Bedienobjekte in den Hintergrund rücken. Umgekehrt kann der Nutzer eine Zuggeste von dem Ausgabebereich weg und auf den Nutzer zu ausführen; die Darstellung wird dann so verändert, dass sich die Anordnung der Bedienelemente auf den Nutzer zu bewegt und die Perspektive sich so verändert, dass die zweiten Bedienobjekte eines zunächst weiter innen liegenden Rings zur Anzeige kommen.

Bei dem Verfahren erfolgte Bedienung also insbesondere so, dass der Nutzer mittels der Bediengeste die virtuelle Anordnung der Bedienobjekte räumlich verschiebt, sodass die Bewegung der Bediengeste zu einer dargestellten Bewegung der Bedienobjekte analog verläuft. Der Nutzer kann also die virtuelle Anordnung durch seine Bediengeste verschieben und dadurch zu einer bestimmten Hierarchieebene und/oder zu einem bestimmten Bedienobjekt navigieren.

Bei einer Weiterbildung ist genau ein erstes Bedienobjekt der Ausgabe als aktuell ausgewähltes Element markiert, wobei die Markierung insbesondere automatisch erfolgt. Dies beschleunigt vorteilhafterweise die Bedienung mittels einer Bediengeste.

Beispielsweise kann das erste Bedienobjekt immer dann automatisch markiert werden, wenn es sich einem bestimmten Bereich des Ausgabebereich befindet, etwa mittig auf einer Anzeigefläche. Das heißt, eine Markierung kann auch dadurch vorgenommen werden, dass das Bedienobjekt an eine bestimmte Position verschoben wird, etwa mittels einer Verschiebegeste.

Das aktuell ausgewähltes Bedienobjekt kann auf an sich bekannte Weise hervorgehoben dargestellt werden, beispielsweise durch eine besondere Position, Größe, Farbe oder Helligkeit.

Bei einer Ausbildung umfasst die Bediengeste eine Schiebe- oder Ziehgeste mit einer Hand eines Nutzers, wobei die Bediengeste insbesondere mit einer geschlossenen oder geöffneten Hand ausgeführt wird. Die Schiebe- oder Ziehgeste wird insbesondere in einer Richtung auf das erste Bedienobjekt zu oder von ihm weg durchgeführt. Der Nutzer kann dadurch vorteilhafterweise besonders einfach und schnell verschiedene Bediengesten unterscheiden.

Insbesondere wird erfasst, mit welcher Handhaltung eine Bediengeste durchgeführt wird und in welche Richtung die Hand dabei zeigt. Beispielsweise kann unterschieden werden, ob bei einer geöffneten Hand die Handfläche zu dem Bedienobjekt hin oder von ihm weg, insbesondere zum Nutzer hin zeigt. Ferner kann ein Öffnen und Schließen der Hand erfasst werden, insbesondere am Anfang oder Ende einer Bediengeste, etwa um eine Bediengeste zum Greifen und/oder Loslassen durchzuführen.

Bei einer Weiterbildung weist das Bediensystem zumindest einen ersten und einen zweiten Bedienmodus auf. Dabei wird die Ausgabe in Abhängigkeit von dem Bedienmodus gebildet. Es wird ein Auslösesignal erfasst, wobei in Abhängigkeit von dem Auslösesignal ein Wechsel zwischen dem ersten und zweiten Bedienmodus durchgeführt wird. Dadurch wird die Ausgabe vorteilhafterweise an die aktuelle Situation angepasst erzeugt. Dabei wird insbesondere zwischen verschiedenen Bedienmodi gewechselt, für die auch unterschiedliche Ausgaben des ersten oder zweiten Bedienobjekts erzeugt werden.

Bei einem Wechsel zwischen verschiedenen Bedienmodi kann auch die Ausgabe verändert werden, insbesondere eine Anordnung des Bedienobjekts oder mehrere Bedienobjekte innerhalb der Ausgabe. Zum Beispiel können mehrere Bedienobjekte bei einem ersten Bedienmodus neben- und übereinander nach Art einer Matrix angeordnet werden, während sie bei einem zweiten Bedienmodus in einer Reihe nebeneinander oder übereinander angeordnet sind. Die Anordnung der Bedienobjekte kann ferner beim Übergang mittels einer Animation verändert werden, wobei beispielsweise Bedienobjekte entlang einer Anzeigefläche verschoben und neu angeordnet werden.

In Abhängigkeit von dem aktuell aktiven Bedienmodus kann die Bedienung beispielsweise mittels verschiedener bevorzugter Bedienmodalitäten erfolgen. In dem ersten Bedienmodus kann die Bedienung beispielsweise bevorzugt mittels Bediengesten in einem dreidimensionalen Raum erfolgen, während in dem zweiten Bedienmodus eine Bedienung mittels Bediengesten entlang einer zweidimensionalen Oberfläche bevorzugt ist. Ferner können in Abhängigkeit von dem Bedienmodus andere Bedienmodalitäten bevorzugt sein, etwa eine Steuerung mittels einer Spracheingabe, eines Zeigegeräts oder physischer Bedienelemente wie Schalter oder Regler.

Das Auslösesignal für den Wechsel zwischen den Bedienmodi kann auf unterschiedliche Weisen erzeugt werden, etwa automatisch beim Erfüllen einer bestimmten Bedingung oder durch manuelles Erzeugen des Auslösesignals anhand einer Bedienhandlung des Nutzers. Beispielsweise kann ein Zustand oder Einstellungsparameter einer Einrichtung des Fahrzeugs erfasst und der Bedienmodus in Abhängigkeit von dem erfassten Zustand oder Parameter eingestellt werden. Das Auslösesignal kann ferner in Abhängigkeit von Einstellungen für einen bestimmten Nutzer erzeugt werden.

Bei einer Ausbildung wird das Auslösesignal bei einer Änderung einer Sitzposition erfasst. Beispielsweise wird zwischen einem Nähe- und einem Distanzmodus unterschieden. Der Bedienmodus kann dadurch vorteilhafterweise an die Möglichkeiten des Nutzers zu Bedienung angepasst werden.

Die Sitzposition kann beispielsweise relativ zu dem Ausgabebereich bestimmt werden, etwa anhand des Abstands zu einem Display. Es kann ferner eine Reichweite eines Nutzers auf dem Sitz bestimmt werden oder vorgegeben sein, beispielsweise durch eine Armlänge oder durch einen fest vorgegebenen Abstandswert. Dabei wird zum Beispiel zwischen einer displaynahen und einer displayfernen Position des Sitzes unterschieden, je nachdem, ob sich das Display in Reichweite des Nutzers auf dem Sitz befindet oder außerhalb der Reichweite. Das Auslösesignal wird dann erzeugt, wenn eine Verstellung der Sitzposition über den Reichweitewert hinaus oder darunter erfasst wird.

Bei einer weiteren Ausbildung wird das Auslösesignal in Abhängigkeit von einem Wechsel eines Fahrmodus des Fahrzeugs erfasst. Der Bedienmodus kann dadurch vorteilhafterweise besonders gut an die Bedürfnisse des Fahrers angepasst werden.

Beispielsweise kann der Bedienmodus wechseln, wenn ein bestimmter Grad der Automatisierung der Fahrzeugsteuerung über- oder unterschritten wird. Beispielsweise kann ein erster Bedienmodus eingestellt werden, wenn das Fahrzeug manuell oder mit einem geringeren Grad der Automatisierung gesteuert wird, und ein zweiter Bedienmodus kann eingestellt werden, wenn das Fahrzeug mit einem höheren Grad der Automatisierung oder vollständig automatisch gesteuert wird.

Beispielsweise kann bei einem Übergang von einer manuellen oder teilautomatischen Steuerung zu einer zumindest weitgehend vollautomatischen Steuerung des Fahrzeugs sowohl die Sitzposition von einer displaynahen zu einer displayfernen Position verstellt werden und gleichzeitig kann das Auslösesignal zum Wechsel des Bedienmodus erzeugt werden.

Das erfindungsgemäße Bediensystem in einem Fahrzeug umfasst eine Steuereinheit, eine Erfassungseinheit und eine mit der Steuereinheit gekoppelte Ausgabeeinheit mit einem Ausgabebereich. Dabei ist die Steuereinheit dazu eingerichtet, eine Ausgabe mit zumindest einem ersten Bedienobjekt zu erzeugen und in dem Ausgabebereich der Ausgabeeinheit auszugeben. Dabei ist das erste Bedienobjekt einem ersten Element einer ersten Hierarchieebene eines hierarchisch geordneten Datenbestands zugeordnet und die Erfassungseinheit ist dazu eingerichtet, eine Bediengeste zu erfassen, wobei die erfasste Bediengeste eine Bewegungsrichtung eines Betätigungsobjekts senkrecht zu dem Ausgabebereich umfasst. Ferner ist die Steuereinheit dazu eingerichtet, die Ausgabe in Abhängigkeit von der Bewegungsrichtung der Bediengeste so zu verändern, dass das erste Bedienobjekt durch ein zweites Bedienobjekt ersetzt wird. Dabei wird beim Verändern der Ausgabe eine Bewegung des ersten Bedienobjekts in die Bewegungsrichtung der Bediengeste perspektivisch ausgegeben und das zweite Bedienobjekt ist einer zweiten Hierarchieebene des hierarchisch geordneten Datenbestands zugeordnet, wobei beim Verändern der Ausgabe eine Bewegung des ersten Bedienobjekts in die Bewegungsrichtung der Bediengeste perspektivisch ausgegeben wird; und wobei mittels der Bediengeste eine virtuelle Anordnung des ersten Bedienobjekts räumlich verschoben wird.

Das erfindungsgemäße Bediensystem ist insbesondere ausgebildet, mittels des vorstehend beschriebenen erfindungsgemäßen Verfahrens betrieben zu werden. Das Bediensystem weist somit dieselben Vorteile auf wie das erfindungsgemäße Verfahren.

Bei einer Ausbildung des erfindungsgemäßen Bediensystems sind die Ausgabeeinheit und die Erfassungseinheit in einem Touchscreen integriert. Dadurch können die Eingaben vorteilhafterweise besonders einfach erfasst werden.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Bediensystems,
- Figur 2: zeigt ein Ausführungsbeispiel des erfindungsgemäßen Verfahrens,
- Figur 3: zeigt ein Ausführungsbeispiel einer bei dem erfindungsgemäßen Verfahren erzeugten Ausgabe mit einem Hinweis auf die Durchführung einer Bediengeste,
- Figur 4: zeigt ein Ausführungsbeispiel einer bei dem erfindungsgemäßen Verfahren erzeugten Ausgabe mit Hinweisen auf verschiedene Richtungen,
- Figur 5: zeigt ein Ausführungsbeispiel einer bei dem erfindungsgemäßen Verfahren erzeugten Ausgabe mit einem Popup zur Lautstärkeregelung,
- Figuren 6A und 6B: zeigen Ausführungsbeispiele von bei dem erfindungsgemäßen Verfahren erzeugten Ausgaben mit Hinweisen zur Ausführung von Bediengesten,
- Figur 7: zeigt ein Ausführungsbeispiel einer bei dem erfindungsgemäßen Verfahren erzeugten Ausgabe mit einem Popup zum Steuern einer Beleuchtungseinrichtung und
- Figuren 8A bis 8D: zeigen ein Ausführungsbeispiel einer bei dem Verfahren erzeugten Ausgabe und ihre Bedienung in verschiedenen Bedienmodi.

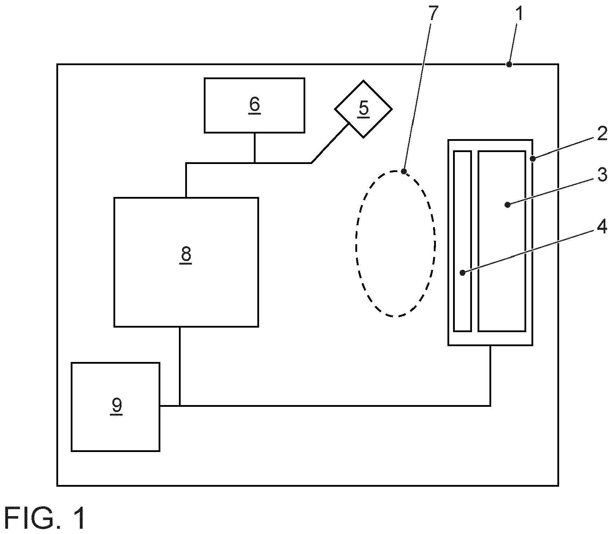

Mit Bezug zu Figur 1 wird ein Fahrzeug mit einem Ausführungsbeispiel des erfindungsgemäßen Bediensystems erläutert.

Das Fahrzeug 1 umfasst einen Touchscreen 2, der auf an sich bekannte Weise ausgebildet ist und eine Anzeigeeinheit 3 sowie eine darüber angeordnete berührungsempfindliche Oberfläche 4 umfasst. Das Fahrzeug 1 umfasst ferner eine Erfassungseinheit 5, die als Kamera 5 ausgebildet ist und durch die in einem Erfassungsbereich 7 im Innenraum des Fahrzeugs 1 Gesten erfassbar sind, und eine als Lautsprecher 6 ausgebildete Ausgabeeinheit 6. Der Touchscreen 2, die Kamera 5 und der Lautsprechern 6 sind mit einer Steuereinheit 8 gekoppelt, mit der auch eine Multimediaeinheit 9 gekoppelt ist.

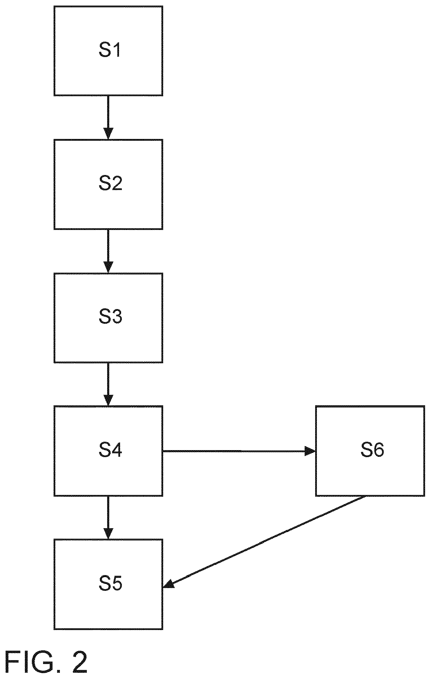

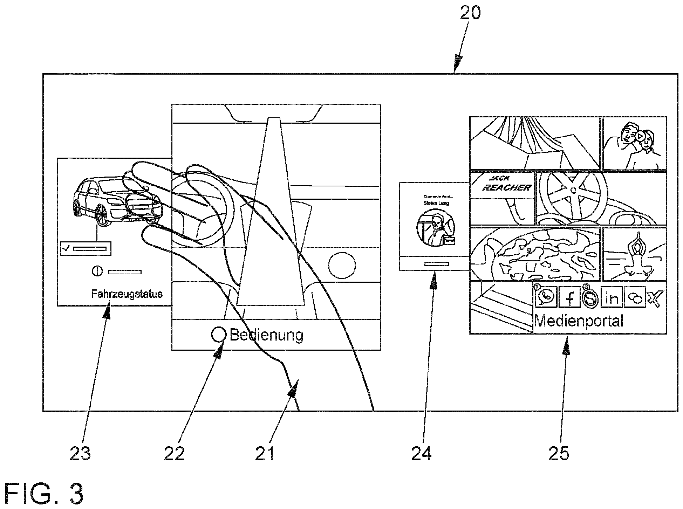

Mit Bezug zu den Figuren 2 und 3 wird ein Ausführungsbeispiel des erfindungsgemäßen Verfahrens und eine dabei erzeugte Ausgabe mit einem Hinweis auf die Durchführung einer Bediengeste erläutert. Dabei wird von dem oben mit Bezug zu Figur 1 erläuterten Ausführungsbeispiel des erfindungsgemäßen Bediensystems ausgegangen, welches durch die Beschreibung des Verfahrens weiter spezifiziert wird.

In einem Schritt S1 wird erfasst, welche Funktionen aktuell bedienbar sind. Hierzu wird bestimmt, welche Einrichtungen aktuell durch die Steuereinheit 8 angesteuert werden können und sich in einem Zustand befinden, in dem Eingaben eines Nutzers verarbeitet werden können. Bei dem Ausführungsbeispiel sind Funktionen der Multimediaeinheit 9 bedienbar, beispielsweise Funktionen zur Ausgabe von audiovisuellen Inhalten, Texten und Bildern, zur Steuerung eines Navigationsgeräts, zum Zugriff auf weitere Einrichtungen des Fahrzeugs 1 oder zum Steuern einer Telekommunikationseinrichtung, etwa eines Telefons. Dabei kann ein Nutzer auch durch hierarchisch geordnete Datenbestände, etwa Musiktitel oder Adressdaten, oder Menüstrukturen navigieren. Bei weiteren Ausführungsbeispielen können alternativ oder zusätzlich andere Funktionen und/oder Einrichtungen des Fahrzeugs 1 bedienbar sein.

In diesem Schritt S1 wird beim Ausführungsbeispiel ferner die Identität des Nutzers erfasst. Dies erfolgt bei dem Ausführungsbeispiel anhand eines mobilen Geräts, das dem Nutzer zugeordnet ist, insbesondere einem Fahrzeugschlüssel. Bei weiteren Ausführungsbeispielen kann die Identifikation anhand eines Mobiltelefons erfolgen, dessen Position im Bereich eines bestimmten Fahrzeugsitzes, etwa des Fahrersitzes, im Fahrzeug 1 bestimmt wird und das einem bestimmten Nutzer zugeordnet ist. Die Identifikation kann ferner anhand einer Eingabe des Nutzers erfolgen, der sich beispielsweise durch eine Eingabe mittels des Touchscreens 2 über einen Login anmeldet.

In Abhängigkeit von den bedienbaren Funktionen werden in einem weiteren Schritt S2 potentielle Bedienhandlungstypen bestimmt, das heißt, es wird ermittelt, welche Arten von Bedienhandlungen ein Nutzer durchführen kann, um bestimmte Eingaben zur Bedienung der bedienbaren Funktionen vorzunehmen. Bei dem Ausführungsbeispiel werden zunächst verschiedene Bedienmodalitäten bestimmt, etwa dreidimensionale Gesten im Erfassungsbereich 7, Gesten auf der berührungsempfindlichen Oberfläche 4, Sprachbefehle und/oder Betätigungen physischer Bedienelemente wie Tast-, Druck- und Drehschalter, Schiebe und Drehregler oder Knöpfe.

In einem weiteren Schritt S3 werden bevorzugte Bedienhandlungstypen bestimmt, wobei bei dem Ausführungsbeispiel die Bedienhandlungstypen einer bestimmten bevorzugten Bedienhandlungstypen einer bevorzugten Bedienmodalität als bevorzugt bestimmt werden. Das heißt, es wird bestimmt, welche Bedienhandlungstypen in der aktuellen Situation oder für bestimmte bedienbare Funktionen besonders gut geeignet sind.

Bei dem Ausführungsbeispiel wird hierzu die Position eines Fahrzeugsitzes bestimmt, auf dem sich ein Nutzer befindet. Hierzu kann zunächst bestimmt werden, auf welchem Fahrzeugsitz sich der Nutzer tatsächlich befindet, etwa mittels einer Sitzmatte oder einer Detektionseinrichtung, ferner kann ein bestimmter Fahrzeugsitz dem Bediensystem oder einer bestimmten bedienbaren Einrichtung 9 des Fahrzeugs 1 zugeordnet sein. Bei dem Ausführungsbeispiel wird davon ausgegangen, dass der Fahrer des Fahrzeugs 1 als Nutzer angesehen wird und sich auf dem Fahrersitz befindet. Bestimmten Positionen des Fahrzeugsitzes können verschiedene Bedienmodalitäten als bevorzugt zugeordnet sein.

Befindet sich beispielsweise der Fahrersitz, etwa bei einer automatischen Fahrt, in einer nach hinten verfahrenen Position, von der aus Bedienelemente am Armaturenbrett des Fahrzeugs 1 weit entfernt sind, so können Bedienmodalitäten als bevorzugt bestimmt werden, die keine Betätigung von am Armaturenbrett angeordneten Bedienelementen erfordern; zum Beispiel kann in diesem Fall eine Steuerung mittels Sprachbefehlen oder dreidimensionalen Gesten bevorzugt sein.

Alternativ oder zusätzlich kann bei einem weiteren Ausführungsbeispiel bestimmt werden, welche Bedienhandlungstypen für bestimmte Eingaben einen minimalen physischen Aufwand erfordern oder eine möglichst schnelle Bedienung erlauben. Zum Beispiel kann ein Scrollen durch eine Liste mehrere Betätigungen eines physischen oder virtuell dargestellten Tasters erfordern, während eine analoge Bedienung mittels einer Wischgeste entlang der berührungsempfindlichen Oberfläche 4 oder im Erfassungsbereich 7 wesentlich schneller und mit geringerem Aufwand durchgeführt werden kann. Bei einem weiteren Beispiel kann ein Springen zu einem bestimmten Eintrag einer Liste mittels eines Sprachbefehls besonders schnell erfolgen, während die Eingabe des Eintrags mittels einer Tastatur mehrere Betätigungen erfordert.

Bei weiteren Ausführungsbeispielen können alternativ oder zusätzlich andere Parameter genutzt werden, um bevorzugte Bedienhandlungstypen oder Bedienmodalitäten zu bestimmen, etwa ein manueller oder zumindest teilweise automatischer Fahrmodus, ein befahrener Straßentyp, eine geographische Umgebung oder Einstellungen, Eingaben und Präferenzen für den identifizierten Nutzer oder Fahrer des Fahrzeugs 1.

In einem weiteren Schritt S4 wird eine Bedienhistorie für den identifizierten Nutzer erfasst. Die Bedienhistorie umfasst bei dem Ausführungsbeispiel Informationen darüber, mittels Bedienhandlungen welcher Bedienhandlungstypen der Nutzer in der Vergangenheit Eingaben für bestimmte bedienbare Funktionen vorgenommen hat. Sie umfasst ferner Informationen darüber, auf welche Weise der Nutzer die Bedienhandlungen ausgeführt hat, beispielsweise wie gut die Eingaben anhand der Bedienhandlungen bestimmter Bedienhandlungstypen erkannt wurden und inwiefern eine veränderte Durchführung der Bedienhandlungen die Erkennbarkeit verbessern würde. Das heißt, die Bedienhistorie umfasst Informationen darüber, ob der Nutzer in der Vergangenheit Bedienhandlungen bestimmter Bedienhandlungstypen verwendet hat, um bestimmte Eingaben vorzunehmen, und wie er diese Bedienhandlungen ausgeführt hat.

Zum Beispiel hat der Nutzer in der Vergangenheit Bedienhandlungen eines bestimmten Bedienhandlungstyps ungenau ausgeführt, etwa indem er eine Wischgeste im dreidimensionalen Raum mit zu hoher Geschwindigkeit, über eine zu geringe Strecke und/oder nicht ausreichend geradlinig durchgeführt hat. Dies führte in der Vergangenheit dazu, dass die Erkennung der Wischgeste mit einer geringen Konfidenz erfolgte, wobei beispielsweise die Amplitude der Wischgeste oder ihre Richtung mit nur geringer Genauigkeit bestimmt werden konnte. Bei einem weiteren Beispiel hat der Nutzer in der Vergangenheit einen Sprachbefehl undeutlich, zu leise oder zu schnell ausgesprochen. Bei einem weiteren Beispiel hat der Nutzer beim Betätigen eines virtuellen Bedienelements auf dem Touchscreen 2 einen Bereich am Rand des Bedienelements berührt, sodass die Eingabe nicht klar von der Betätigung eines benachbarten Bedienelements abgegrenzt werden konnte.

Bei dem Ausführungsbeispiel wird die Bedienhistorie so erfasst, dass diese eine vorgegebene Anzahl von Eingaben des Benutzers umfasst. Bei weiteren Ausführungsbeispielen kann eine bestimmte Zeitdauer vorgegeben sein oder die Anzahl der berücksichtigten Bedienhandlungen in der Vergangenheit kann während der Ausführung des Verfahrens variabel bestimmt werden.

Wenn anhand der erfassten Bedienhistorie bestimmt wird, dass der Nutzer zur Bedienung normalerweise einen bevorzugten Bedienhandlungstyps verwendet und die entsprechende Bedienhandlung gut erkennbar ausführt, so wird in einem weiteren Schritt S5 eine Bedienhandlung erfasst, ein entsprechendes Steuersignal erzeugt und die Einrichtung eines Fahrzeugs 1 angesteuert.

Wird dagegen bestimmt, dass der Nutzer den bevorzugten Bedienhandlungstyps selten oder niemals verwendet hat oder dass der Nutzer Bedienhandlung des bevorzugten Bedienhandlungstyps nicht optimal ausführt, so wird in einem Schritt S6 eine Ausgabe mit einem Hinweis auf die Ausführung des potentiellen Bedienhandlungstyps erzeugt und ausgegeben.

Dem Nutzer soll verdeutlicht werden, dass er etwa potentielle Gesten gar nicht oder falsch ausführt oder dass er die Bedienung mit weniger physischem Aufwand ausführen könnte. Die Ausgabe wird nun individuell in der jeweiligen Situation so erzeugt, dass auf einen vom Nutzer nicht ausgeführten, falsch ausgeführten oder nicht optimal ausgeführten Bedienhandlungstyp, etwa eine bestimmte Geste, hingewiesen wird.

Bei dem Beispiel wird dem Nutzer bei Nichtnutzung bestimmter Gesten an bestimmten Stellen der Bedienung einer Mensch-Maschine-Schnittstelle an diesen Stellen beispielsweise eine schematische Hand angezeigt, welche die Ausführung des noch ungenutzten Gestentyps darstellt. Bei falscher oder nicht optimaler Ausführung der Geste eines bestimmten Gestentyps wird die intendierte Geste erkannt und es wird ebenfalls eine schematische Hand angezeigt, welche die korrekte oder sparsamere Gestenausführung in Bewegung anzeigt.

Bei weiteren Beispielen erfolgt wird die korrekte Gestenausführung auf andere Art dargestellt. So kann zum Beispiel mit Hilfe holografischer oder autostereoskopischer Anzeigen eine dreidimensionale Hand im Raum vor einem Display oder in einem anderen Erfassungsbereich die korrekte Gestenbewegung angezeigt werden. Eine mögliche Erweiterung des Verfahrens besteht darin, neben der visuellen Anzeige die visuellen Ratschläge um eine Sprachausgabe zu ergänzen. So kann auf in einer bestimmten Bediensituation nie ausgeführten Gesten, die der Nutzer aber an anderer Stelle korrekt ausführt und kennt, per Sprachausgabe ein Hinweis ausgegeben werden; etwa "Du kannst hier auch eine Swipe-Geste ausführen". Bei falscher oder nicht optimaler Gestenausführung kann ein sprachlicher Hinweise zur Ausführung und Verbesserung ausgegeben werden; etwa "Du musst die Geste am Ende ganz kurz halten" oder "Du brauchst den Arm nicht so weit zu bewegen". Dadurch kann gezielter auf das Problem der Ausführung eines Bedienhandlungstyps eingegangen und eine natürliche Interaktion wie mit einem natürlichen Gegenüber imitiert werden.

Ferner kann beim Erfassen der Identität des Nutzers, anhand eines Schlüssels oder anhand von biometrischen Eigenschaften, individuell auf die Gestenbedienung und -nutzung der verschiedenen Nutzer eingegangen werden. Das System erkennt etwa bereits beim Einstieg in das Fahrzeug anhand der Bedienhistorie, dass der Nutzer in bestimmten Bediensituationen eine bestimmte Geste nicht ausführt. Es kann auf diese Weise ferner erkannt werden, dass der Nutzer bereits in der Vergangenheit Probleme hatte, eine bestimmte Geste korrekt oder mit geringem physischem Aufwand auszuführen. Es kann dann für den Nutzer eine individuelle Unterstützung zur optimalen Gestenbedienung erreicht werden.

Figur 3 zeigt ein Beispiel einer Ausgabe mit einem Hinweis auf die Ausführung des potentiellen Bedienhandlungstyps. Bei dem dort beispielhaft dargestellten Fall ist der bevorzugte Bedienhandlungstypen eine Wischgeste im dreidimensionalen Raum, durch die verschiedene grafische Objekte 22 bis 25 innerhalb einer Bedienoberfläche 20 verschoben werden können, insbesondere um ein Element in den Vordergrund zu bringen, auszuwählen und anschließend weiter zu bedienen. Der Hinweis auf eine solche Wischgeste ist dabei als schematisch in Umrissen gezeigte Darstellung einer Hand 21 ausgebildet. Die Ausgabe ist dabei dynamisch gebildet, das heißt, die schematisch dargestellte Hand 21 wird in der Weise bewegt dargestellt, wie die Wischgeste im dreidimensionalen Raum ausgeführt werden soll. Bei der Bedienoberfläche 20 des Ausführungsbeispiels ist allerdings auch eine Bedienung auf andere Weise mittels nicht bevorzugter Bedienhandlungen möglich, etwa durch Betätigen von Pfeiltasten, durch eine Wischgeste entlang der berührungsempfindlichen Oberfläche 4, durch einen Sprachbefehl oder durch Betätigen eines physischen Bedienelements, etwa eines Dreh-Drück-Stellers.

Bei dem Ausführungsbeispiel wird die Ausgabe ferner in Abhängigkeit davon gebildet, wie der Nutzer seine Ausführung von Bedienhandlungen des bevorzugten Bedienhandlungstyps verbessern kann, das heißt, es werden diejenigen Aspekte der Ausführung besonders deutlich dargestellt, bei denen Verbesserungsbedarf besteht. Beispielsweise kann die Handhaltung während der Geste besonders deutlich dargestellt werden, ebenso die Geschwindigkeit oder die Amplitude der Bewegung, etwa über eine besonders lange Strecke.

Bei einem weiteren Ausführungsbeispiel erfolgt die Darstellung des Hinweises auf die Ausführung des potentiellen Bedienhandlungstyps durch Ausgabe eines schriftlichen Hinweises. Bei weiteren Ausführungsbeispielen kann die Ausgabe mittels einer holographischen oder autostereoskopischen Anzeige erfolgen, insbesondere um dreidimensionale Gesten darzustellen. Bei weiteren Ausführungsbeispielen kann die Ausgabe alternativ oder zusätzlich akustisch wahrnehmbar sein, etwa durch einen gesprochenen Hinweis auf die Ausführung des bevorzugten Bedienhandlungstyps. Insbesondere kann die Ausgabe mittels einer Ausgabemodalität erfolgen, die auf eine bevorzugte Bedienmodalität hinweist, etwa durch die Ausgabe eines akustisch wahrnehmbaren Hinweises auf die Bedienung mittels Sprachbefehlen oder durch Hervorheben eines betätigbaren physischen oder virtuell dargestellten Bedienelements, etwa durch eine Helligkeit, Farbe oder einen dynamischen Effekt wie Blinken.

Nach der Ausgabe kann bei einem weiteren Ausführungsbeispiel im Schritt S5 eine Bedienhandlung des Nutzers als Eingabe erfasst und ein entsprechendes Steuersignal erzeugt werden, um die Einrichtung 9 des Fahrzeugs 1 zu bedienen. Die Bedienung kann auch mittels einer Bedienhandlung eines nicht bevorzugten Bedienhandlungstyps erfolgen.

Anhand der erfassten Bedienhandlung wird die Bedienhistorie aktualisiert.

Bei einem weiteren Ausführungsbeispiel des erfindungsgemäßen Verfahrens wird eine Bedienhandlung eines Nutzers erfasst, etwa eine Geste in dem Erfassungsbereich 7 oder ein Sprachbefehl, wobei der Bedienhandlung jedoch keine aktuell zur Verfügung stehende Bedienung einer Einrichtung 9 des Fahrzeugs 1 zugeordnet wird. Dies kann dadurch bedingt sein, dass die Bedienhandlung nicht richtig erkannt und einem falschen Bedienhandlungstyps zugeordnet wurde oder dass der Nutzer eine Bedienhandlung eines nicht zur Verfügung stehenden Bedienhandlungstyps durchgeführt hat, etwa weil ihm nicht bewusst ist, welcher Bedienhandlungstypen aktuell zur Verfügung stehen oder wie diese auszuführen sind. Es wird eine Intentionshypothese bestimmt, das heißt, das System bildet eine Hypothese darüber, welcher Bedienhandlungstypen wahrscheinlich vom Nutzer intendiert war. Die Ausgabe wird dann mit einem Hinweis auf den gemäß der Intentionshypothese intendierten Bedienhandlungstypen erzeugt.

Beispielsweise kann als Intentionshypothese derjenige Bedienhandlungstyps bestimmt werden, welcher eine höchste Ähnlichkeit zu der erfassten Bedienhandlung aufweist. Dabei wird ferner berücksichtigt, welche potentiellen Bedienhandlungstypen tatsächlich aktuell zur Verfügung stehen. Ferner können anhand der Bedienhistorie solche Bedienhandlungstypen berücksichtigt werden, die der Nutzer bevorzugt verwendet, oder es kann bestimmt werden, ob die erfasste Bedienhandlung besondere Ähnlichkeiten zu einer in der Vergangenheit erfassten Bedienhandlung aufweist, bei welcher der Nutzer einen bestimmten Bedienhandlungstyps nicht optimal ausgeführt hat.

Zum Beispiel kann als Bedienhandlung ein Sprachbefehl erfasst werden, der eine klangliche oder semantische Ähnlichkeit zu einem potentiellen Bedienhandlungstyp aufweist, der dann als Intentionshypothese bestimmt wird. Bei einem weiteren Beispiel kann eine dreidimensionale Geste als Bedienhandlung erfasst werden, die eine derzeit nicht vorgesehene Richtung aufweist, etwa eine vertikale Richtung statt einer horizontalen Richtung, wobei dann ein Bedienhandlungstyp mit einer horizontalen Richtung als Intentionshypothese bestimmt wird.

Bei einem weiteren Ausführungsbeispiel wird ferner anhand der Bedienhistorie und/oder anhand einer erfassten Bedienhandlung ein Lernvorgang durchgeführt, wobei die Erkennung des Bedienhandlungstyps durch das System verbessert wird. Hierzu können an sich bekannte Verfahren etwa des Maschinenlernens angewandt werden. Auf diese Weise wird bei dem Verfahren sowohl ein Lernbedarf für den Nutzer erkannt, dem die optimale Anwendung eines bevorzugten Bedienhandlungstyps ermöglicht wird, als auch ein Lernbedarf des Systems, für welches die Erkennung eines bestimmten Bedienhandlungstyps für den Nutzer verbessert wird.

Bei einem weiteren Ausführungsbeispiel wird in dem Erfassungsbereich 7 eine Zeigegeste des Nutzers erfasst und anhand der erfassten Zeigegeste eine Richtung bestimmt. Es wird bestimmt, auf welche Einrichtung 9 des Fahrzeugs 1 der Nutzer zeigt und diese Einrichtung 9 wird ausgewählt. Eine anschließend erfasste Bedienhandlung wird als Bedienung der ausgewählten Einrichtung 9 behandelt, das heißt, anhand der Bedienhandlung wird ein Steuersignal für die ausgewählte Einrichtung 9 erzeugt. Zum Beispiel zeigt der Nutzer auf eine Schiebetür des Fahrzeugs 1 und führt mittels einer Schiebe- oder Wischgeste in eine Richtung ein automatisches Öffnen oder Schließen der Schiebetür durch. Bei einem weiteren Beispiel zeigt der Nutzer auf ein Display des Fahrzeugs 1, auf dem Bilddaten oder Bedienoberflächen ausgebbar sind, wobei eine anschließende Bedienhandlung als Bedienung der Ausgabe oder der Bedienoberfläche behandelt wird. Auf diese Weise kann die Zahl der zur Verfügung stehenden Bedienhandlungstypen auf relevante Bedienmöglichkeiten für eine bestimmte Einrichtung 9 eingeschränkt werden.

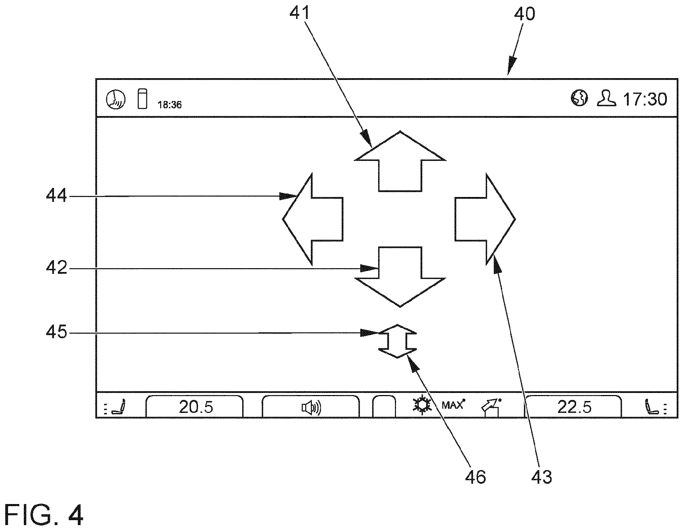

Mit Bezug zu Figur 4 wird ein Ausführungsbeispiel einer bei dem erfindungsgemäßen Verfahren erzeugten Ausgabe mit Hinweisen auf verschiedene Richtungen erläutert. Dabei wird von den erläuterten Ausführungsbeispielen des erfindungsgemäßen Bediensystems und Verfahrens, die durch die weiteren Ausführungsbeispiele weiter spezifiziert werden.

Die Ausgabe 40 gemäß dem Ausführungsbeispiel umfasst Pfeile 41 bis 46, die jeweils eine Raumrichtung darstellen und teilweise als Doppelpfeile ausgebildet sind. Mittels der Pfeile 41 bis 46 wird ausgegeben, in welche Raumrichtungen potentielle Gesten als Bedienhandlungen ausgeführt werden können. Je nach der konkreten Bediensituation und je nachdem, welche potentiellen Bedienhandlungstypen mittels Gesten vorgesehen sind, wird ein Pfeil oder es werden mehrere Pfeile 41 bis 46 gleichzeitig in der Ausgabe 40 dargestellt. Die Pfeile 41 bis 46 können zudem überlagernd zusätzlich zu beliebigen anderen grafischen Darstellungen innerhalb der Ausgabe 40 erzeugt werden.

Bei weiteren Ausführungsbeispielen kann zusätzlich ausgegeben werden, ob und in welcher Weise eine Geste mit einer bestimmten Handhaltung während der Ausführung einer Geste ausgeführt wird, etwa eine geöffnete oder geschlossene Hand, eine nach oben, unten, vorne oder hinten gerichtete Handfläche, gestreckte oder gebeugte Finger oder eine Ausrichtung der Hand im Raum. Dies kann durch zusätzliche grafische Objekte oder eine bestimmte Gestaltung der Pfeile 41 bis 46 ausgegeben werden. Ferner kann statt der Pfeile 41 bis 46 eine andere Darstellung eines grafischen Objekts zur Ausgabe verwendet werden, etwa eines Betätigungsobjekts wie etwa einer Hand, insbesondere schematisch mittels Umrissen. Die Darstellung kann ferner dynamisch erzeugt werden.

Bei dem Ausführungsbeispiel stehen Pfeile nach oben 41 und nach unten 42 für Gesten, die eine Bewegung von oben nach unten umfassen. Mittels derartiger Gesten kann beispielsweise ein Scrollen oder ein Bildlauf in vertikaler Richtung nach oben oder unten implementiert werden. Ferner stehen Pfeile nach rechts 43 und nach links 44 für Gesten mit einer Bewegung zu der jeweiligen Seite hin. Mittels derartiger Gesten kann beispielsweise ein Blättern oder Verschieben zu einer Seite hin implementiert werden. Gesten, die eine Bewegung parallel zur Oberfläche der Ausgabe 40 umfassen, werden insbesondere als Wisch- oder "*Swipe*"-Gesten bezeichnet.

Ferner sind perspektivisch dargestellte Pfeile nach hinten 45 und nach vorne 46, das heißt insbesondere zu der Anzeigefläche der Ausgabe 40 hin beziehungsweise von ihr weg, vorgesehen. Diese Pfeile 45, 46 werden insbesondere perspektivisch dargestellt, wobei an sich bekannte Weisen der grafischen Darstellung so genutzt werden, dass ein räumlicher Eindruck beim Betrachter der Ausgabe 40 so entsteht, dass ein Pfeil nach hinten 45 oder nach vorne 46 in die Ebene der Ausgabe 40 hinein und damit vom Betrachter weg beziehungsweise aus der Ebene der Ausgabe 40 heraus und damit zum Betrachter hin zeigt.

Bei weiteren Ausführungsbeispielen sind andere Pfeilformen denkbar, insbesondere gerade oder gebogene Verläufe, durch die beispielsweise auf die Ausführung einer Geste mit einer bestimmten Trajektorie, etwa einer Kreisbahn oder einem Kreissegment, hingewiesen wird. Ferner kann die Ausgabe bei weiteren Ausführungsbeispielen so gebildet sein, dass durch sie darauf hingewiesen wird, dass am Anfang und/oder Ende der Ausführung einer Geste, etwa eines Swipe oder einer anderen Bewegung, eine Pose des Betätigungsobjekts für längere oder kürzere Zeit gehalten werden soll. Auf diese Weise kann beispielsweise das Ende einer Bewegung für eine Eingabe mittels einer Geste markiert werden.

Für eine Gestenbedienung wird bei dem Ausführungsbeispiel ein Gestenset verwendet, das auf bestimmte Bedienhandlungstypen, das heißt bestimmte Arten von Gesten, beschränkt ist. Insbesondere ist das Gestenset so gebildet, dass eine vollständige Bedienbarkeit eines Infotainmentsystems ermöglicht wird. Mittels eines solchen Gestensets ist ein gesamtes System insbesondere hierarchisch gegliederter Daten und Bedienebenen bedienbar, statt nur Teile innerhalb einzelner Kontexte zu bedienen. Ein solches Gestenset umfasst insbesondere eine überschaubare Anzahl von Gesten, damit sich der Nutzer diese merken kann. Zugleich sind die Gesten eines solchen Gestensets so gebildet, dass sie besonders deutlich voneinander unterschieden und leicht erfasst werden können, etwa mittels einer Kamera.

Bei dem Ausführungsbeispiel umfasst das Gestenset fünf Basisgesten. Anhand von Figur 4 wird eine grafische Anzeige mit grafischen Objekten 41 bis 46 erläutert, mittels welcher Hinweise auf die Basisgesten ausgegeben werden können.

Bei einer Geste "*Swipe,* horizontal" bewegt sich eine Hand insbesondere in Hochkant-Haltung in eine horizontale Richtung nach rechts oder links, insbesondere relativ zu einem Bedienobjekt, das beispielsweise auf einer Anzeigefläche oder innerhalb der Ausgabe 40 ausgegeben wird. Ein Halten der Pose der Hand am Ende der Geste führt insbesondere zu einer andauernden Funktion, etwa indem eine dauernde Betätigung erfasst wird. Bei einer Geste "*Swipe,* vertikal" bewegt sich eine Hand in flacher oder liegender Haltung in eine vertikale Richtung nach oben oder unten, insbesondere relativ zu dem Bedienobjekt. Auch hier kann ein Halten der Pose der Hand am Ende der Geste insbesondere zu einer andauernden Funktion führen, etwa indem eine dauernde Betätigung erfasst wird. Bei einer "OK"-Geste bewegt sich eine Hand mit einer Handfläche nach oben, wobei die Fingerspitzen insbesondere in Richtung des Bedienobjekts, das etwa auf einem Bildschirm angezeigt wird, zeigen. Bei einer "Stopp"-Geste bewegt sich eine Hand in offener Haltung und mit der Handfläche zum Bedienobjekt, insbesondere in eine Richtung zum Bedienobjekt hin. Auch hier kann eine Pose der Hand am Ende der Geste gehalten und als dauernde Betätigung erfasst werden. Bei einer "Lautstärke"-Geste schließlich kann ein Zeigefinger auf das Bedienobjekt zeigen und beispielsweise in seitlicher Richtung bewegt werden. Zur Erleichterung der Merkfähigkeit sind die meisten der genannten Basisgesten jeweils paarweise in gegengesetzte Richtungen ausführbar. Mittels einer *Swipe*-Geste lässt sich beispielsweise sowohl nach rechts als auch nach links beziehungsweise nach oben oder unten wischen. Das Auswählen oder Betätigen des Bedienobjekts, etwa um in eine bestimmte Hierarchieebene oder in ein bestimmtes Menü zu gelangen oder um eine Anfrage zu bestätigen, erfolgt durch eine Bewegung zum Körper hin, das Verlassen einer Hierarchieebene oder eines Menüs oder das Ablehnen einer Anfrage erfolgt durch die gegengesetzte Bewegung vom Körper weg.

Diese paarweisen Gesten werden genutzt, um die komplette Navigation durch eine Vielzahl hierarchisch geordneter Menüs oder anderer Hierarchieebenen zu ermöglichen und entsprechen den drei Raumrichtungen im dreidimensionalen Raum. Die Möglichkeiten von Raumgesten werden dadurch anhand aller drei Dimensionen ausgeschöpft. Diese zusätzliche Dimension ermöglicht gegenüber bekannten Bedienungen mit einer zweidimensionalen Bedienung, etwa per Touchscreen, eine bessere Strukturierung der Inhalte und entspricht der räumlichen Denkweise des Nutzers in größerem Maße.

Die genannten Basisgesten zur Navigation durch Menüs oder hierarchisch geordnete Elemente folgen insbesondere dem Prinzip, dass das zu bedienende Element nicht zuvor auf dem Bildschirm selektiert werden muss, etwa durch eine Zeigegeste auf ein bestimmtes Objekt. Stattdessen ist insbesondere stets ein Element der Ausgabe bereits ausgewählt. Die Geste wird dann als unmittelbar auf dieses Element bezogene Eingabe ausgewertet. Beispielsweise kann für ein in der Mitte einer Anzeigefläche angezeigtes und bereits automatisch ausgewähltes Bedienobjekt direkt ein "Öffnen"-Vorgang durchgeführt werden, etwa mittels einer "OK"-Geste. Um das Bedienobjekt auszuwählen, kann es dabei mittels einer Swipe-Geste in die Mitte der Anzeigefläche oder in einen anderen automatischen Auswahlbereich verschoben werden. Insbesondere in einem Fahrzeug hat dies den Vorteil, dass Inhalte zuverlässig und einfach ausgewählt werden können, auch wenn beispielsweise Erschütterungen bei der Fahrt eine genaue Navigation erschweren, im Gegensatz beispielsweise zu bekannten Bedienungen mittels eines Cursors oder eines Touchscreens.

Bei dem oben erläuterten Gestenset ist ferner vorgesehen, dass eine Lautstärke oder ein anderer Parameter des Systems mittels einer entsprechenden "Lautstärkegeste" geregelt wird. Beispielsweise zeigt der Nutzer mit ausgestrecktem Zeigefinger oder einem Betätigungsobjekt in Richtung des Bedienobjekts oder einer Anzeigefläche. Die Lautstärkeregelung kann dadurch angezeigt werden, dass ein Lautstärke-Anzeiger als Popup angezeigt wird, wobei ein Lautstärkepegel durch seitliche Bewegung des Fingers geregelt werden kann. Der Lautstärke-Anzeige folgt dabei insbesondere der Bewegung des Fingers und die Lautstärke wird erhöht oder reduziert.

Ferner können Optionsgesten definiert sein, die nicht einer Menünavigation dienen, sondern als Shortcuts zum Aufruf bestimmter Funktionen dienen. Insbesondere sind drei Optionsgesten vorgesehen, nämlich zum Direktsprung zum Homescreen (Stopp-Geste mit Bildung einer Faust am Ende), zum Aufrufen eines Tutorials, das die Gesten und deren Funktionen zeigt und erklärt (Winken) sowie zum Stummschalten einer Tonwiedergabe (Bewegung der geöffneten Hand nach unten). Die Optionsgesten führen bei dem Ausführungsbeispiel stets zum Aufrufen der gleichen Funktion, unabhängig vom jeweiligen Kontext, in dem sie ausgeführt werden.

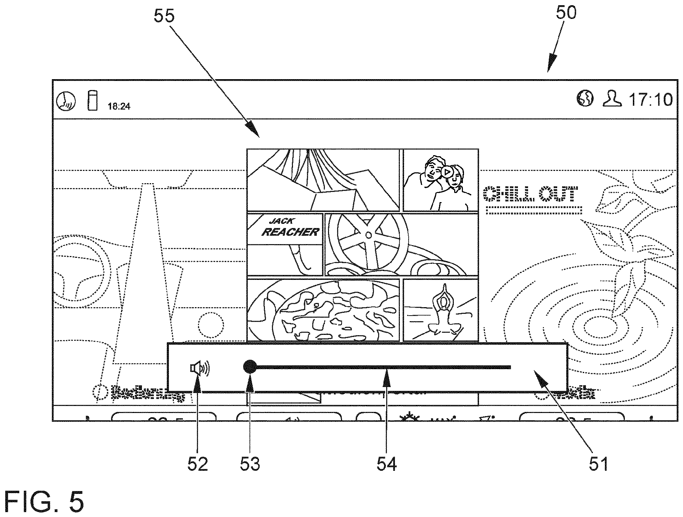

Mit Bezug zu Figur 5 wird ein Ausführungsbeispiel einer bei dem erfindungsgemäßen Verfahren erzeugten Ausgabe mit einem Popup zur Lautstärkeregelung erläutert. Dabei wird von den erläuterten Ausführungsbeispielen des erfindungsgemäßen Bediensystems und Verfahrens ausgegangen, die durch die weiteren Ausführungsbeispiele weiter spezifiziert werden.

Die Ausgabe 50 gemäß dem Ausführungsbeispiel umfasst ein grafisches Objekt 51, welches hier für eine aktuell abgespielten Mediendatei steht, sowie ein Lautstärke-Bedienobjekt 51, welches als Popup die weiteren Elemente der Ausgabe 50 überlagernd ausgegeben wird. Das Lautstärke-Bedienobjekt 51 umfasst ein Lautstärkesymbol 52 sowie ein Skalenobjekt 54, das als horizontale gerade Linie ausgebildet ist, wobei verschiedenen Positionen der Längserstreckung verschiedene Werte der Lautstärke zugeordnet sind, insbesondere eine von links nach rechts steigende Lautstärke. An dem Skalenobjekt 51 ist ein Zeigerobjekt 53, hier ein ausgefüllter Kreis, angeordnet, wobei die Position des Zeigerobjekts 53 an dem Skalenobjekt 51 den aktuell eingestellten Wert der Lautstärke anzeigt.

Bei dem Ausführungsbeispiel gelangt ein Nutzer zu der dargestellten Ausgabe 50, wenn er während der durch das grafische Objekt 55 angezeigten Wiedergabe einer Mediendatei seinen gestreckten Zeigefinger auf die Ausgabe 50 richtet und eine horizontale Bewegung durchführt. Entsprechend der Bewegung des Zeigefingers, insbesondere proportional dazu, wird in der Ausgabe 50 das Zeigerobjekt 53 entlang des Skalenobjekts 51 verschoben und im gleichen Maße der eingestellte Wert der Lautstärke verändert.

Bei dem Ausführungsbeispiel ist das Lautstärke-Bedienobjekt 51 auch mittels einer Berührung des Touchscreens 2, der die Ausgabe 50 ausgibt, bedienbar. Der Nutzer kann beispielsweise das Zeigerobjekt 53 berühren und mittels einer Wischgeste entlang des Touchscreens 2 entlang des Skalenobjekts 54 verschieben. Er kann ferner mittels einer Berührung des Skalenobjekts 54 einer bestimmten Position den dieser Position zugeordneten Wert der Lautstärke einstellen, wobei das Zeigerobjekt 53 an die Position der Berührung verschoben wird.

Die oben beschriebene Zeigegeste mittels eines ausgestreckten Zeigefingers in Richtung der Ausgabe 50, gefolgt von einer Bewegung in horizontaler Richtung, wird bei dem Ausführungsbeispiel insbesondere als "Lautstärkegeste" bezeichnet. Es handelt sich hierbei insbesondere um eine Optionsgeste, die bei dem Ausführungsbeispiel unabhängig vom aktuell ausgegebenen Kontext angewendet werden kann. Das heißt, unabhängig davon, was in der Ausgabe 50 ausgegeben wird, kann mittels der Lautstärkegeste die aktuell eingestellte Lautstärke angezeigt und verändert werden. Dies vereinfacht die Bedienung, da ein bestimmter Kontext oder Inhalt aufgerufen werden muss, um die Lautstärke zu verändern.

Insbesondere können die Lautstärkegeste sowie weitere Optionsgesten bei dem Beispiel in jedem Kontext angewendet werden können, das heißt unabhängig von der gerade aktiven Anzeige oder einem aktuell ausgewählten Bedienobjekt. Beispielsweise beeinflussen die Lautstärkegeste zur Lautstärkeregelung und eine Geste zum Stummschalten die Lautstärke des gerade aktiven akustischen Kontexts, ähnlich wie etwa an sich bekannte analoge Lautstärkeregler, die etwa einen Drehregler verwenden.

Bei den in dieser Beschreibung erläuterten Ausführungsbeispielen des erfindungsgemäßen Verfahrens können verschiedene Bedienmodalitäten verwendet werden, um Funktionalitäten zu bedienen. Dabei werden insbesondere bevorzugte Bedienmodalitäten bestimmt, die je nach der konkreten Situation angeben, auf welche Weise eine Bedienung besonders vorteilhaft durchgeführt werden kann. Die Bedienung kann mittels der bevorzugten Bedienmodalität beispielsweise besonders sicher, schnell, mit geringerem physischem Aufwand und/oder ohne übermäßige Beanspruchung der Konzentration des Nutzers erfolgen.

Mögliche Bedienmodalitäten sind etwa Betätigung oder Durchführung von Gesten während einer Berührung einer Oberfläche oder eines Bedienobjekts, Gesten im dreidimensionalen Raum, Betätigungen analoger Bedienelemente wie Schalter, Taster oder Regler, Sprachbefehle, Verwenden einer Fernbedienung oder eine Gestenbedienung in Verbindung mit Sprachbefehlen.

Die Bedienung eines Infotainmentsystems kann beispielsweise vollständig über verschiedene Modalitäten ermöglicht werden, um einem Nutzer die persönlich präferierte Bedienmodalität zu gewähren. So bevorzugen manche Nutzer grundsätzlich eine Sprachbedienung, andere eine Gestenbedienung. Der Nutzer kann dadurch ferner situationsabhängig frei die eine oder die andere Modalität wählen, zum Beispiel eine Geste anstelle der Sprache, um einen schlafenden Beifahrer nicht zu stören. Ferner wird bei dem Beispiel dem Nutzer nahegelegt, welcher Bedienhandlungstyp und/oder welche Bedienmodalität derzeit und für die aktuell bedienbaren Funktionen am besten geeignet ist. Eine bevorzugte Bedienmodalität wird bei dem Ausführungsbeispiel anhand der folgenden Logik bestimmt:
Eine Gestenbedienung kann besonders dann eine bevorzugte Bedienmodalität sein, wenn ein "unscharfes", nicht konkret zu benennendes Bedienziel vorliegt, wenn also der Nutzer beispielsweise eine Suche durchführt oder durch eine Reihe von Objekten navigiert ("*browsing*") sowie wenn eine genaue Benennung beispielsweise eines Sonderziels umständlich einzugeben wäre. Eine Gestenbedienung kann ferner bei kurzen Interaktionen bevorzugt sein oder wenn sprachliche Unterbrechungen in einer bestimmten Situation störend sind. Sie kann ferner für eine räumliche Auswahl oder räumliche Bedienung bevorzugt sein.

Ein Bedienung mittels Sprachbefehlen kann dann besonders vorteilhaft sein, wenn das Bedienziel klar benennbar ist, beispielsweise wenn der Nutzer eine Bezeichnung für eine zu bedienende Funktion oder Einrichtung leicht aussprechen kann. Der Nutzer kann mittels Sprachbefehlen ferner besonders einfach über mehrere Hierarchieebenen springen, ohne zunächst eine längere Suche durchführen zu müssen. Ferner können natürlichsprachliche Eingaben vorgesehen sein.

Eine Bedienung mittels einer Fernbedienung kann dann bevorzugt sein, wenn eine dem Nutzer besonders gut vertraute Bedienung gewährleistet werden soll.

Eine Bedienung mittels einer Kombination von Gesten und Sprachbefehlen kann dann bevorzugt sein, wenn mit einer Einheit interagiert werden soll, deren Benennung unklar oder umständlich ist oder wenn eine besondere Bedienhandlung zum Aktivieren der Sprachsteuerung, etwa das Drücken eines Tastteils oder ein bestimmtes Codewort, umgangen werden soll.

Bei dem Beispiel wird eine Gestenbedienung als bevorzugte Bedienmodalität bestimmt, wenn eine Suche oder ein *Browsen* durchgeführt werden soll, etwa um einen Namen oder eine Adresse zu suchen oder um eine Suche innerhalb einer Liste von Film- oder Musiktiteln durchzuführen. Ferner ist die Gestenbedienung bevorzugt für kurze Interaktionen, wie etwa das Annehmen eines Telefonats, für die Bedienung von Bedienteilen oder Umweltelementen, die am leichtesten räumlich zu selektieren sind oder deren Name nicht bekannt ist, etwa um ein bestimmtes Fenster zu bedienen oder eine bestimmte Beleuchtungseinrichtung einzustellen, sowie wenn eine Unterbrechung durch einen Sprachbefehl stören würde, etwa während eines Telefonats oder wenn ein Beifahrer gestört würde.

Insbesondere werden bei dem Beispiel des Systems zwar mehrere Bedienmodalitäten für eine Bedienung unterstützt, es wird jedoch in der Ausgabe auf die jeweils am besten geeignete Art der Bedienung hingewiesen.

Beispielsweise wird auf die Gestenbedienung zur Annahme eines eingehenden Anrufs hingewiesen, indem visuelle Elemente für verschiedene Bedienoptionen in ähnlicher Weise dynamisch bewegt dargestellt werden, wie eine zugeordnete Bediengeste auszuführen ist. Insbesondere wird eine Bewegung der Bedienelemente in die Richtungen dargestellt, in welche die entsprechenden Gesten auszuführen sind. Gleichzeitig sind die Bedienelemente bei dem Beispiel jedoch auch selbst bedienbar, etwa durch Berühren einer Anzeigefläche im Bereich der Bedienelemente. Bei weiteren Beispielen kann ferner die Möglichkeit einer Sprachbedienung vorgesehen sein; ein Hinweis auf die entsprechende Möglichkeit wird dann etwa mittels eines angezeigten Textes, der den entsprechenden Sprachbefehl wiedergibt, oder mittels eines Symbols für die Sprachsteuerung ausgegeben.

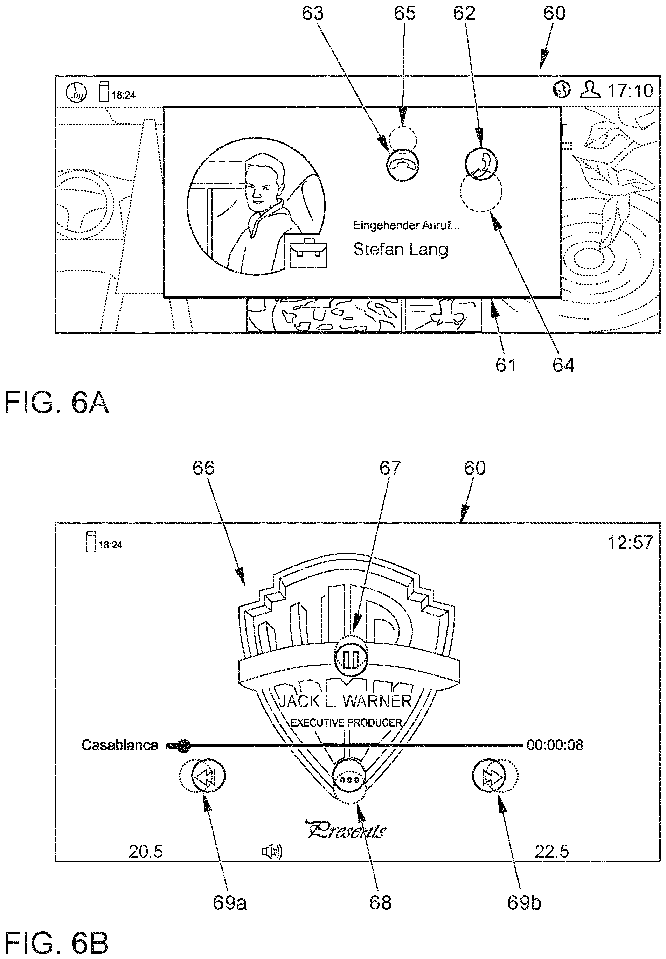

Mit Bezug zu den Figuren 6A und 6B werden Ausführungsbeispiele von bei dem erfindungsgemäßen Verfahren erzeugten Ausgaben mit Hinweisen zur Ausführung von Bediengesten erläutert. Dabei wird von den erläuterten Ausführungsbeispielen des erfindungsgemäßen Bediensystems und Verfahrens ausgegangen, die durch die weiteren Ausführungsbeispiele weiter spezifiziert werden.

Die Ausgabe 60 gemäß dem Ausführungsbeispiel umfasst bei dem in Figur 6A gezeigten Fall ein Popup 61, welches die weiteren Elemente der Ausgabe 60 überlagernd ausgegeben wird. Im Bereich des Popups 61 werden Informationen über einen eingehenden Anruf ausgegeben, insbesondere der Name des Anrufers und ein Profilbild, wobei diese Informationen einer Datenbank mit Kontakten und zugeordneten Zusatzinformationen zugeordnet sind. Das Popup 61 umfasst ferner ein Bedienelement 62 zum Annehmen und ein weiteres Bedienelement 63 zum Ablehnen des eingehenden Anrufs.

Bei dem Ausführungsbeispiel können die Bedienelemente 62, 63 durch Tippgesten bedient werden, wobei der Nutzer den Touchscreen 2 einer Position des jeweiligen Bedienelements 62, 63 kurzzeitig berührt, um die jeweils zugeordnete Funktion auszuführen. Zudem ist bei dem Ausführungsbeispiel eine Gestenbedienung vorgesehen. Bei dem Beispiel wird bestimmt, dass die Gestenbedienung die bevorzugte Bedienmodalität darstellt, das heißt, eine Bedienung zum Annehmen oder Ablehnen des Anrufs erfolgt bevorzugt durch eine diesen Funktionen jeweils zugeordnete Geste. Diese Bevorzugung ist bei dem Ausführungsbeispiel dadurch bedingt, dass sich die Sitzposition des Nutzers weit entfernt von dem Touchscreen 2 befindet und dieser daher nur schwierig berührt werden kann.

Die Gesten zum Annehmen oder Ablehnen des Anrufs werden dadurch ausgegeben, dass die Bedienelemente 62, 63 dynamisch dargestellt werden. In Figur 6A ist dies durch dynamische Objekte 64, 65 angedeutet. Zum Annehmen des Anrufs soll der Nutzer eine Geste durchführen, bei welcher er seine Hand in eine Richtung senkrecht zur Ebene der Ausgabe 60 von dieser weg bewegt, etwa entsprechend einer "Herwinken"-, "Herziehen"- oder "Heranholen"-Geste. Umgekehrt soll der Nutzer zum Ablehnen des Anrufs eine Geste durchführen, bei welcher er seine Hand in eine Richtung senkrecht zur Ebene der Ausgabe 60 zu dieser hin bewegt, etwa entsprechend einer "Wegschiebe"-, "Ablehnung"- oder "Abweisung"-Geste. Die entsprechenden Bedienelemente 62, 63 werden dynamisch und perspektivisch so dargestellt, dass sie eine Bewegung in eine Richtung aufzuweisen scheinen, die der jeweiligen Bewegung der Geste entspricht.

Bei weiteren Ausführungsbeispielen wird die Ausgabe 60 mittels einer dreidimensionalen Darstellungstechnik erzeugt, etwa mittels einer autostereoskopischen oder holographischen Darstellung.

Bei dem in Figur 6A gezeigten Fall wird also eine animierte Ausgabe erzeugt, die Bedienelemente zum Annehmen und Ablehnen des Anrufs umfasst, wobei die Bedienelemente in Richtung der auszuführenden Geste bewegt dargestellt werden. Mittels einer perspektivischen Darstellung wird eine Bewegung der Bedienobjekte vom Fahrer weg oder zum Fahrer hin dargestellt, wobei sich ein roter (Ablehnen) und grüner (Annehmen) Kreis mittels Anzeige zahlreicher kleiner beziehungsweise größerer Kreise räumlich im Display zu bewegen scheinen.

Bei dem in Figur 6B gezeigten Fall umfasst die Ausgabe 60 eine Hintergrunddarstellung 66, die hier eine Wiedergabe einer Videodatei entspricht. Die Ausgabe 60 umfasst ferner Bedienelemente 67, 68, 69a, 69b, die ähnlich wie die Bedienelemente 62, 63 im Fall der Figur 6A sowohl durch Berühren des Touchscreens 2 betätigt werden können, als auch zur Ausgabe von Hinweisen auf potentielle Bedienungsgesten dienen. Bei dem Ausführungsbeispiel werden die Bedienelemente 67, 68, 69a, 69b insbesondere dann angezeigt, wenn eine Bedienabsicht erfasst wurde, etwa beim Eintreten eines Betätigungsobjekts in den Erfassungsraum 7 oder bei einer Berührung des Touchscreens 2.

Wie bereits oben mit Bezug zu Figur 6A erläutert, sind auch hier die Bedienelemente 67, 68, 69a, 69b dynamisch dargestellt. Sie zeigen Bewegungen, die den Bewegungen potentieller Bediengeste entsprechen. Beispielsweise ist ein Bedienelement 67 zum Anhalten der Wiedergabe vorgesehen und mit einem entsprechenden Symbol ausgebildet. Das Bedienelement 67 wird ferner animiert so dargestellt, dass es sich von dem Nutzer zu entfernen scheint. Die entsprechende Bediengeste zum Anhalten umfasst demnach eine Bewegung auf die Ausgabe 60 zu, etwa entsprechend einer "Drücken"-Geste. Bei dem Ausführungsbeispiel wird ferner das Bedienelement 68 zum Aufrufen eines Kontextmenüs nach unten bewegt dargestellt und die entsprechende Bediengeste umfasst ein Wischen nach unten. Die Bedienelemente 69a, 69b zum Spulen zurück (Bedienelement 69a) beziehungsweise nach vorne (Bedienelement 69b) werden mit Bewegungen nach links beziehungsweise rechts animiert dargestellt, was auch hier der Bewegung der jeweiligen Bediengesten, insbesondere Wischgesten, entspricht.

Bei weiteren Ausführungsbeispielen können die Bediengeste noch andere Weise ausgebildet oder unterschiedlich kombiniert werden. Insbesondere basieren die vorgesehenen Gesten auf dem oben mit Bezug zu Figur 4 erläuterten Set von Basisgesten, optional ergänzt durch die ebenfalls oben erläuterten Optionsgesten.

Bei dem Beispiel wird mittels einer Gestenbedienung nicht nur durch eine Menühierarchie navigiert, sondern es werden auch Kontexte bedient. Aufgrund der Unterschiedlichkeit der Kontexte sind unterschiedliche Funktionen vorgesehen. Wie oben mit Bezug zu den Figuren 6A und 6B erläutert, kann beispielsweise ein eingehendes Telefonat angenommen oder abgelehnt werden. Ferner kann ein aktuell wiedergegebener Film in beide Richtungen geschult oder pausiert werden. Zudem ist ein Kontextmenü wählbar, um Zusatzoptionen einzustellen, etwa Untertitel oder eine Sprache. Die Vielfalt der notwendigen Funktionen wird mittels des oben erläuterten Gestensets bedient, wobei beispielsweise das Ablehnen eines Telefonats durch dieselbe Stopp-Geste erfolgt wie das Pausieren eines Films. Damit der Nutzer weiß, in welchem Kontext ihm welche Bedienoptionen zur Verfügung stehen, wird dem Nutzer kontextabhängig angezeigt, welche Gesten möglich sind und welche Funktion sie jeweils haben. Ferner kann ausgegeben werden, welches die bevorzugte Bedienmodalität ist.

Bei dem Ausführungsbeispiel für einen eingehenden Anruf werden also zwei als "*Bubbles"* dargestellte Bedienobjekte 62, 63 angezeigt, bei dem Beispiel eines Films mehrere Bedienobjekte 67, 68, 69a, 69b als *Bubbles.* Diese *Bubbles* enthalten jeweils ein Symbol und optional eine Farbe, wodurch die Funktion ausgegeben wird. Beispielsweise steht ein Hörersymbol in roter Farbe für ein Beenden des Telefonats oder ein Pausezeichen steht für das Pausieren. Die *Bubbles* bewegen sich ferner in die Richtung, in welche die entsprechende Geste auszuführen ist, das heißt nach rechts oder links, oben oder unten, oder perspektivisch zum Nutzer hin oder von ihm weg.

Bei dem Anzeigekonzept wird der Nutzer auf die verfügbaren Bedienhandlungstypen der Gestensteuerung oder andere bevorzugte Bedienhandlungstypen hingewiesen, indem diese kontextspezifisch angezeigt werden. Dadurch reduziert sich der Merkaufwand für den Nutzer und die Anzahl ungewollter Bedienungen wird reduziert.

Die oben mit Bezug zu den Figuren 6A und 6B beschriebenen Darstellungen sind besonders gut dazu geeignet, dem Nutzer leicht und intuitiv erfassbar, dabei aber wenig auffällig und subtil zu signalisieren, welche Bedienmöglichkeiten er in der jeweiligen Bediensituation hat. Alternativ oder zusätzlich können andere Ausgaben verwendet werden, um den Nutzer zur Verwendung bestimmter Bediengesten aufzufordern. Zum Beispiel können die oben mit Bezug zu Figur 4 beschriebenen Pfeile 41 bis 46 ausgegeben werden, wobei solche zusätzlichen Objekte jedoch häufig als störend empfunden werden. Die räumlich dargestellte Bewegung von Elementen in Gestenrichtung kann dagegen auch ohne zusätzliche Grafikobjekte ausgegeben werden, sodass die ausgegebene Bedienoberfläche nicht überfüllt wird.

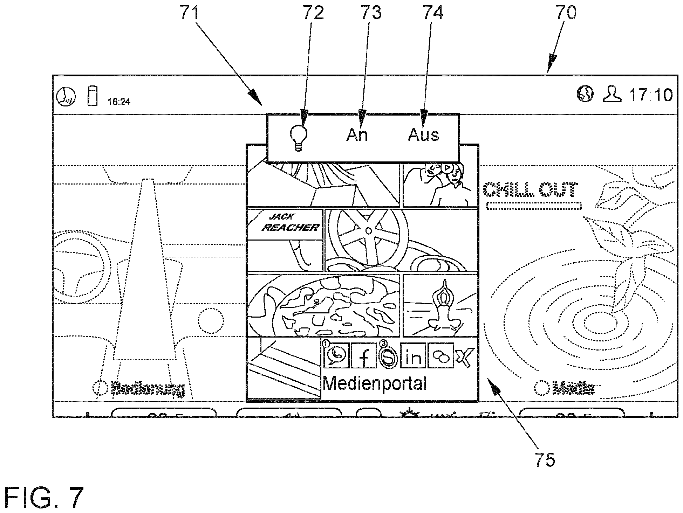

Mit Bezug zu Figur 7 wird ein Ausführungsbeispiel einer bei dem erfindungsgemäßen Verfahren erzeugten Ausgabe mit einem Popup zum Steuern einer Beleuchtungseinrichtung erläutert. Dabei wird von den erläuterten Ausführungsbeispielen des erfindungsgemäßen Bediensystems und Verfahrens ausgegangen, die durch die weiteren Ausführungsbeispiele weiter spezifiziert werden.

Die Ausgabe 70 gemäß dem Ausführungsbeispiel umfasst ein grafisches Objekt 75, welches hier für eine aktuell abgespielten Mediendatei steht, sowie ein Popup 71, welches die weiteren Elemente der Ausgabe 70 überlagernd ausgegeben wird. Das Popup 71 umfasst ein Helligkeitssymbol 72 sowie Bedienelemente 73, 74 zum Anschalten beziehungsweise Ausschalten einer Beleuchtungseinrichtung.

Bei dem Ausführungsbeispiel gelangt ein Nutzer zu der dargestellten Ausgabe 70, wenn er während der durch das grafische Objekt 75 angezeigten Wiedergabe einer Mediendatei seinen gestreckten Zeigefinger auf eine Einrichtung des Fahrzeugs 1 richtet und diese Zeigegeste eine vorgegebene Zeit hält. Entsprechend der Richtung des Zeigefingers wird bestimmt, auf welche Einrichtung des Fahrzeugs 1 der Nutzer zeigt, bei dem Ausführungsbeispiel eine Beleuchtungseinrichtung. Anschließend wird das Popup 71 erzeugt, das Bedienelemente 73, 74 umfasst, welche auf die möglichen Bedienungen hinweisen. Bei dem Ausführungsbeispiel gibt es auch hier verschiedene potentielle Bedienmodalitäten, insbesondere das Berühren des Touchscreens 2 im Bereich der Bedienelemente 73, 74 oder Sprachbefehle. Bei dem Ausführungsbeispiel ist die weitere Bedienung mittels Sprachbefehlen bevorzugt, für deren Durchführung die Bedienelemente 73, 74 als Textelemente ausgebildet sind. Hierdurch wird dem Nutzer angezeigt, mittels welcher Sprachbefehle er die Einrichtung bedienen kann.

Zusätzlich dazu kann bei dem Ausführungsbeispiel ferner eine Bedienung mittels einer weiteren Zeigegeste vorgenommen werden, wobei der Nutzer auf eines der Bedienelemente 73, 74 innerhalb des Popup 71 zeigt, um dieses zu betätigen und die damit verknüpfte Funktion auszulösen. Ferner kann vorgesehen sein, dass eine Bedienung mittels einer weiteren Bediengeste durchgeführt werden kann, etwa ein Wischen nach unten zum Ausschalten oder nach oben zum Anschalten.

Bei dem in Figur 7 gezeigten Ausführungsbeispiel kann eine Bedienung also bevorzugt mittels einer Geste in Kombination mit einem Sprachbefehl ausgeführt werden. Diese Bedienmodalität wird als bevorzugt bestimmt, wenn eine Einrichtung des Fahrzeugs bedient werden soll, ohne dass hierfür eine bestimmte *Wake-Up*-Phrase zum Aktivieren einer reinen Sprachbedienung genutzt werden soll. Der Nutzer zeigt bei diesem Beispiel auf die zu bedienende Einrichtung, die bei dem Beispiel eine Leuchte im Innenraum des Fahrzeugs ist. Anschließend setzt er die Bedienung mittels Sprachbefehl fort. Um dem Nutzer nach der Zeigegeste anzuzeigen, dass eine Sprachbedienung durchgeführt werden kann, wird ein Popup mit den möglichen Sprachoptionen angezeigt.

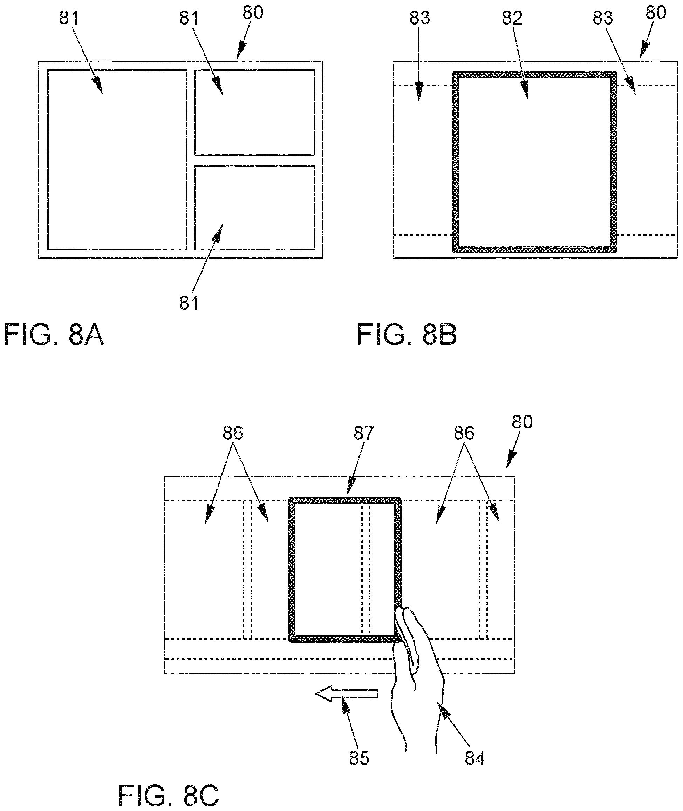

Mit Bezug zu den Figuren 8A bis 8D wird ein Ausführungsbeispiel einer bei dem Verfahren erzeugten Ausgabe und ihre Bedienung in verschiedenen Bedienmodi erläutert. Dabei wird von den erläuterten Ausführungsbeispielen des erfindungsgemäßen Bediensystems und Verfahrens ausgegangen, die durch die weiteren Ausführungsbeispiele weiter spezifiziert werden.

Bei dem in Figur 8A gezeigten Fall befindet sich das Bediensystem in einem Nahmodus, das heißt, der Nutzer ist mit seinem Sitz in Reichweite des Touchscreens 2 angeordnet. Die Ausgabe 80 umfasst mehrere Widgets 81, die nach Art einer Matrix neben- und übereinander angeordnet sind. Die bevorzugte Bedienmodalität ist bei diesem Ausführungsbeispiel im Nahmodus eine Bedienung durch Berühren des Touchscreens 2 und gegebenenfalls Gesten entlang der berührten Oberfläche des Touchscreens 2.

Bei dem in Figur 8B gezeigten Fall wurde ein automatischer Fahrmodus des Fahrzeugs 1 aktiviert und der Sitz des Nutzers, der nun nicht mehr manuell in die Steuerung des Fahrzeugs eingreifen muss, wurde nach hinten verfahren. Der Touchscreen 2 ist dadurch schwer erreichbar und der Bedienmodus wird daher zu einem Distanzmodus umgeschaltet. Die bevorzugte Bedienmodalität ist nunmehr die Bedienung mittels Gesten im dreidimensionalen Raum, insbesondere im Erfassungsbereich 7 im Innenraum des Fahrzeugs 1. Beim Wechsel des Bedienmodus ändert sich auch die Ausgabe 80 so, dass die Anzeige nunmehr für die neue bevorzugte Bedienmodalität optimiert ist.

Das heißt, bei dem Ausführungsbeispiel ist das Bediensystem sowohl mittels eines Touchpads, als auch mittels Gesten bedienbar. Bei zumindest teilweise automatischen Fahrmodi, insbesondere bei einem Automatisierungsgrad von *Level 4* oder *Level 5*, wird insbesondere ein Fahrersitz nach hinten verfahren um einen höheren Sitzkomfort zu ermöglichen, wodurch jedoch auch eine Bedienung eines Touchscreens am Armaturenbrett aufgrund der Nichterreichbarkeit des Displays erschwert wird. In diesem Fall soll eine Gestenbedienung als bevorzugte Bedienmodalität bereitgestellt werden. Hierfür muss das Anzeigekonzept angepasst werden, da nicht alle Anzeigen gut für eine Gestenbedienung geeignet sind. Ferner wären sonst aufgrund der größeren Sitzentfernung zu klein dargestellte Inhalte schwer sichtbar.

Bei dem Beispiel wird für displayferne Sitzpositionen eine für die Gestenbedienung optimierte Anzeige in einem "Distanzmodus" angezeigt. Dabei werden bei dem Beispiel lediglich drei "Kontexte", bei dem Ausführungsbeispiel ausgebildet als Kacheln, Widgets oder Fenster, zeitgleich angezeigt. Diese werden ausreichend groß dargestellt, um auch aus größerer Distanz erkennbar zu sein.

Da bei einer Bedienung mittels Gesten eine einfachere Struktur der Anzeige von Nutzen ist, sind die Objekte 82, 83 der Ausgabe 80 nun nebeneinander angeordnet. Dabei ist das in der Mitte angeordnete Objekt 82 stets automatisch ausgewählt, während die weiteren Objekte 83 daneben angeordnet sind. Bei dem Ausführungsbeispiel wird das ausgewählte Objekt 82 ferner hervorgehoben dargestellt, indem es mit einer größeren Fläche, einer besonderen Umrandung und gegenüber den weiteren Objekten 83 mit stärkerer Helligkeit ausgegeben wird.

Das heißt, bei der Anzeige im Distanzmodus sind die Kontexte einzeilig angeordnet, während sie für eine Touchbedienung mehrzeilig angeordnet sind. Der mittlere Kontext beziehungsweise die mittlere Kachel befindet sich immer im Fokus, das heißt, sie ist stets automatisch ausgewählt, und ist optisch größer, heller und hervorgehoben dargestellt. Dieser Kontext kann also sofort bedient werden , etwa um einen darin dargestellten Film zu starten, ohne den Kontext vorher auswählen zu müssen. Bei einem weiteren Ausführungsbeispiel sind die Kontexte mehrzeilig angeordnet und werden mittels einer Geste, etwa eine Zeigegeste vor dem Öffnen oder Aktivieren ausgewählt.

Bei dem in Figur 8C gezeigten Fall wird dargestellt, wie ein Nutzer durch eine seitliche Wischgeste mit seiner Hand 84 in eine durch einen Pfeil 85 dargestellte Richtung eine Verschiebung der in der Ausgabe 80 gezeigten grafischen Objekte vornimmt. Dabei wird das ausgewählte Objekt 87 aus der Mitte heraus seitlich verschoben und ein weiteres Objekt 86 rückt an seine Stelle, wo es nun automatisch ausgewählt wird. Bei dem Ausführungsbeispiel ist vorgesehen, dass zusätzlich zu der seitlichen Wischgeste im dreidimensionalen Raum auch eine Wischgeste entlang der berührungsempfindlichen Oberfläche des Touchscreen 2 und/oder ein Sprachbefehl zum Verschieben der Objekte 86, 87 genutzt werden kann.

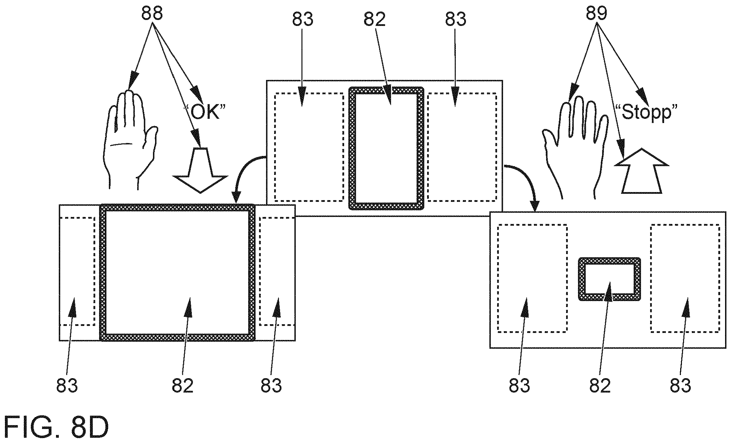

Bei dem in Figur 8D gezeigten Fall wird ausgehend von der mittig dargestellten Situation die Navigation durch einen hierarchisch geordneten Datenbestand oder eine Menüstruktur dargestellt. Zudem können Inhalte eines Infotainmentsystems hierarchisch strukturiert sein. Der Nutzer kann für das aktuelle mittig dargestellte und daher automatisch ausgewählte Objekt 82 eine Betätigung so vornehmen, dass dieses aktiviert oder geöffnet wird oder dass zu einer untergeordneten Hierarchieebene gewechselt wird; die hierzu verwendbaren potentiellen Bedienhandlungstypen sind durch Hinweise 88 dargestellt, die in analoger Weise auch innerhalb der Ausgabe 80 dargestellt werden können. Der Nutzer kann ferner für das ausgewählte Objekt 82 einen Vorgang stoppen oder zu einer übergeordneten Hierarchieebene wechseln; die hierzu verwendbaren potentiellen Bedienhandlungstypen sind durch Hinweise 89 dargestellt.

Zum Aktivieren oder Öffnen eines Kontextes oder zum Wechseln zu einer untergeordneten Hierarchieebene zeigen Hinweise 88 die Möglichkeit einer Bedienung mittels einer dreidimensionalen Handgeste, wobei die Handfläche zum Nutzer hin weist und eine Bewegung zum Nutzer hin durchgeführt wird. Alternativ oder zusätzlich kann der Sprachbefehl "OK" verwendet werden. Umgekehrt zeigen die Hinweise 89 zum Stoppen oder Wechseln zu einer übergeordneten Hierarchieebene einen Hinweis auf eine dreidimensionale Handgeste, bei welcher die Handfläche zum Touchscreen 2 beziehungsweise zur Ausgabe 80 hin weist und wobei eine Bewegung auf die Ausgabe 80 zu durchgeführt wird. Alternativ oder zusätzlich kann der Sprachbefehl "Stopp" verwendet werden.

Figur 8D zeigt ferner, wie die Übergänge zwischen den Hierarchieebenen des Datenbestandes dargestellt werden: Ausgehend von der mittig dargestellten Ausgangssituation wird bei einer Bedienung gemäß den Hinweisen 88, etwa mit einer "OK"-Geste das ausgewählte Objekt 82 vergrößert und die weiteren Objekte 83 werden aus der Darstellung verdrängt. Die Darstellung entspricht also einem Näherkommen des ausgewählten Objekts 82 auf den Nutzer zu beziehungsweise einer Bewegung aus Perspektive des Nutzers auf das ausgewählte Objekt 82 zu. Anschließend werden weitere Objekte der untergeordneten Hierarchieebene auf die gleiche Weise angezeigt, wie in Figur 8D mittig dargestellt, das heißt, ein mittleres Objekt ist automatisch ausgewählt und weitere Objekte sind daneben angeordnet. Umgekehrt wird bei einer Bedienung gemäß den Hinweisen 89, etwa mit einer "Stopp"-Geste das ausgewählte Objekt 82 verkleinert, wobei auch die weiteren Objekte 83 verkleinert werden können. Dies entspricht umgekehrt zu dem oben erläuterten Fall einem Entfernen des ausgewählten Objekts 82 von dem Nutzer beziehungsweise der Nutzer scheint sich von dem ausgewählten Objekt 82 zu entfernen.

Die Ausgabe 80 wird insbesondere so erzeugt, dass das ausgewählte Objekt 82 und die weiteren Objekte 83 so nebeneinander dargestellt werden, dass die Objekte verschiedener Hierarchieebenen oder Menüstufen hintereinander angeordnet erscheinen. Die Ausgabe 80 wird dabei insbesondere perspektivisch so erzeugt, dass eine Anordnung entlang einer dreidimensionalen Struktur, etwa entlang konzentrischer Ringe oder Walzen, dargestellt wird. Beim Wechsel der Hierarchieebene oder Menüstufe bewegt sich die Perspektive der dargestellten Ansicht zu den Objekten der anderen Hierarchieebene.

Kontexte beziehungsweise Objekte 82, 83 auf der gleichen Hierarchieebene werden bei dem Ausführungsbeispiel wie auf einem Karussell seitlich nebeneinander und leicht perspektivisch nach hinten versetzt dargestellt. Die äußeren Kacheln beziehungsweise Objekte 82, 83 werden angeschnitten dargestellt, um zu verdeutlichen, dass sich daneben weitere Inhalte befinden. Beim Öffnen eines Kontextes beziehungsweise eines Objekts 82 wird ein Wechsel in eine tiefere Menüebene durchgeführt und es wird ein Heranzoomen an die entsprechende Kachel dargestellt, wobei die ausgewählte, mittlere Kachel kurzzeitig vergrößert wird. Anschließend wird wieder eine Verkleinerung bis hin zur erneuten Darstellung von drei Kontexten auf der dann tieferen Menüebene dargestellt.

Das Schließen eines Kontextes beziehungsweise Objekts 82 und damit der Wechsel in eine höhere Menüebene wird als perspektivisches Entfernen von der Kachel ausgegeben. In der Anzeige wird dazu das mittlere, automatisch ausgewählte beziehungsweise Objekt 82 verkleinert und anschließend erfolgt wieder eine Vergrößerung bis hin zur erneuten Darstellung von beispielsweise drei Kontexten auf der dann höheren Menüebene.

Durch die beschriebenen visuellen Animationen wird dem Nutzer als visuelle Unterstützung ausgegeben, in welcher Bedienrichtung sich der Nutzer durch die Menühierarchie bewegt, sodass er eine bessere Orientierung über die Menüstruktur und seine aktuelle Position innerhalb der Hierarche erhält.

Bei einem weiteren Ausführungsbeispiel werden ferner Listeninhalte, etwa Einträge eines Telefonbuchs, vertikal statt horizontal angeordnet ausgegeben. Auch hier wird eine perspektivische Anordnung der Einträge entlang einer Walzen- oder Karussellstruktur dargestellt. Die oberen und unteren Elemente werden jeweils angeschnitten dargestellt um zu verdeutlichen, dass sich daneben weitere Inhalte befinden. Ein Ebenenwechsel kann wie oben mit Bezug zu Figur 8D erläutert durchgeführt werden.

Zusätzlich zum visuellen Unterstützen des Ebenenwechsels kann ferner eine akustisch oder haptisch wahrnehmbarer Ausgabe erzeugt werden.

### Bezugszeichenliste

- 1: Fahrzeug
- 2: Touchscreen
- 3: Ausgabeeinheit; Anzeigeeinheit
- 4: Erfassungseinheit; berührungsempfindliche Oberfläche
- 5: Erfassungseinheit; Kamera
- 6: Ausgabeeinheit; Lautsprecher
- 7: Erfassungsbereich
- 8: Steuereinheit
- 9: Einrichtung; Multimediaeinheit
- 20: Bedienoberfläche
- 21: Schematische Darstellung einer Hand
- 22 bis 25: Grafisches Objekt
- S1 bis S6: Schritt
- 40: Ausgabe
- 41, 42: Pfeil ("*Swipe,* vertikal")
- 43, 44: Pfeil ("*Swipe*, horizontal")
- 45, 46: Pfeil (perspektivisch)
- 50: Ausgabe
- 51: Lautstärke-Bedienobjekt
- 52: Lautstärkesymbol
- 53: Zeigerobjekt
- 54: Skalenobjekt
- 55: Grafisches Objekt
- 60: Ausgabe
- 61: Popup
- 62: Bedienelement (Annehmen)
- 63: Bedienelement (Ablehnen)
- 64: Dynamisches Objekt (nach vorne)
- 65: Dynamisches Objekt (nach hinten)
- 66: Hintergrunddarstellung
- 67: Bedienelement (Halt)
- 68: Bedienelement (Kontextmenü)
- 69a, 69b: Bedienelement (Spulen)
- 70: Ausgabe
- 71: Popup
- 72: Helligkeitssymbol
- 73: Bedienelement ("An")
- 74: Bedienelement ("Aus")
- 75: Grafisches Objekt
- 80: Ausgabe
- 81: Widget (Nahmodus)
- 82: Ausgewähltes Objekt
- 83: Weiteres Objekt
- 84: Hand
- 85: Pfeil
- 86: Weiteres Objekt
- 87: Ausgewähltes Objekt
- 88: Hinweise auf "OK"-Geste
- 89: Hinweise auf "Stopp"-Geste

## Patentansprüche

1. Verfahren zum Betreiben eines Bediensystems in einem Fahrzeug, bei dem
eine Ausgabe mit zumindest einem ersten Bedienobjekt erzeugt und in einem Ausgabebereich ausgegeben wird; wobei
das erste Bedienobjekt einem ersten Element einer ersten Hierarchieebene eines hierarchisch geordneten Datenbestands zugeordnet ist;
eine Bediengeste erfasst wird, wobei die erfasste Bediengeste eine Bewegungsrichtung eines Betätigungsobjekts senkrecht zu dem Ausgabebereich umfasst; und
die Ausgabe in Abhängigkeit von der Bewegungsrichtung der Bediengeste so verändert wird, dass das erste Bedienobjekt durch ein zweites Bedienobjekt ersetzt wird; wobei
das zweite Bedienobjekt einer zweiten Hierarchieebene des hierarchisch geordneten Datenbestands zugeordnet ist,
**dadurch gekennzeichnet, dass**
beim Verändern der Ausgabe eine Bewegung des ersten Bedienobjekts in die Bewegungsrichtung der Bediengeste perspektivisch ausgegeben wird; wobei
mittels der Bediengeste eine virtuelle Anordnung des ersten Bedienobjekts räumlich verschoben wird.

2. Verfahren gemäß Anspruch 1,
**dadurch gekennzeichnet, dass**
die Bewegung des ersten Bedienobjekts beim Verändern der Ausgabe in einer dreidimensionalen Darstellung ausgegeben wird.

3. Verfahren gemäß Anspruch 1 oder 2,
**dadurch gekennzeichnet, dass**
das zweite Bedienobjekt in Abhängigkeit von der Bewegungsrichtung der Bediengeste einer übergeordneten oder einer untergeordneten Hierarchieebene relativ zu der Hierarchieebene des ersten Bedienobjekts zugeordnet ist.

4. Verfahren gemäß einem der vorhergehenden Ansprüche,
**dadurch gekennzeichnet, dass**
die Ausgabe zumindest zwei erste Bedienobjekte umfasst, die der gleichen Hierarchieebene zugeordnet und in einer Reihe angeordnet sind.

5. Verfahren gemäß einem der vorhergehenden Ansprüche,
**dadurch gekennzeichnet, dass**
genau ein erstes Bedienobjekt der Ausgabe als aktuell ausgewähltes Element markiert ist.

6. Verfahren gemäß einem der vorhergehenden Ansprüche,
**dadurch gekennzeichnet, dass**
die Bediengeste eine Schiebe- oder Ziehgeste mit einer Hand eines Nutzers umfasst, wobei die Bediengeste insbesondere mit einer geschlossenen oder geöffneten Hand ausgeführt wird.

7. Verfahren gemäß einem der vorhergehenden Ansprüche,
**dadurch gekennzeichnet, dass**
das Bediensystem zumindest einen ersten und einen zweiten Bedienmodus aufweist; wobei
die Ausgabe in Abhängigkeit von dem Bedienmodus gebildet wird; und
ein Auslösesignal erfasst wird, wobei in Abhängigkeit von dem Auslösesignal ein Wechsel zwischen dem ersten und zweiten Bedienmodus durchgeführt wird.

8. Verfahren gemäß Anspruch 7,
**dadurch gekennzeichnet, dass**
das Auslösesignal bei einer Änderung einer Sitzposition erfasst wird.

9. Verfahren gemäß Anspruch 7 oder 8,
**dadurch gekennzeichnet, dass**
das Auslösesignal in Abhängigkeit von einem Wechsel eines Fahrmodus des Fahrzeugs erfasst wird.

10. Bediensystem in einem Fahrzeug, umfassend
eine Steuereinheit (8);
eine Erfassungseinheit (4, 5); und
eine mit der Steuereinheit (8) gekoppelte Ausgabeeinheit (3) mit einem Ausgabebereich; wobei
die Steuereinheit (8) dazu eingerichtet ist, eine Ausgabe mit zumindest einem ersten Bedienobjekt zu erzeugen und in dem Ausgabebereich der Ausgabeeinheit (3) auszugeben; wobei
das erste Bedienobjekt einem ersten Element einer ersten Hierarchieebene eines hierarchisch geordneten Datenbestands zugeordnet ist; wobei
die Erfassungseinheit (4, 5) dazu eingerichtet ist, eine Bediengeste zu erfassen, wobei die erfasste Bediengeste eine Bewegungsrichtung eines Betätigungsobjekts senkrecht zu dem Ausgabebereich umfasst; und
die Steuereinheit (8) ferner dazu eingerichtet ist, die Ausgabe in Abhängigkeit von der Bewegungsrichtung der Bediengeste so zu verändern, dass das erste Bedienobjekt durch ein zweites Bedienobjekt ersetzt wird; wobei
das zweite Bedienobjekt einer zweiten Hierarchieebene des hierarchisch geordneten Datenbestands zugeordnet ist,
**dadurch gekennzeichnet, dass**
beim Verändern der Ausgabe eine Bewegung des ersten Bedienobjekts in die Bewegungsrichtung der Bediengeste perspektivisch ausgegeben wird; wobei
mittels der Bediengeste eine virtuelle Anordnung des ersten Bedienobjekts räumlich verschoben wird.

## Claims

1. Method for operating an operating system in a vehicle, in which
an output is generated with at least one first operating object and is output in an output region; wherein
the first operating object is assigned to a first element of a first hierarchy level of a hierarchically organized database;
an operating gesture is detected, wherein the detected operating gesture comprises a direction of movement of an actuation object perpendicular to the output region; and
the output is changed depending on the direction of movement of the operating gesture such that the first operating object is replaced by a second operating object; wherein
the second operating object is assigned to a second hierarchy level of the hierarchically organized database,
**characterized in that**
when changing the output, a movement of the first operating object in the direction of movement of the operating gesture is output in perspective; wherein
by means of the operating gesture, a virtual arrangement of the first operating object is spatially shifted.

2. Method according to claim 1,
**characterized in that**
the movement of the first operating object is output in a three-dimensional representation when the output is changed.

3. Method according to claim 1 or 2,
**characterized in that**
the second operating object is assigned to a higher or lower hierarchy level relative to the hierarchy level of the first operating object, depending on the direction of movement of the operating gesture.

4. Method according to any one of the preceding claims,
**characterized in that**
the output comprises at least two first operating objects which are assigned to the same hierarchy level and arranged in a row.

5. Method according to any one of the preceding claims,
**characterized in that**
exactly one first operating object of the output is marked as the currently selected element.

6. Method according to any one of the preceding claims,
**characterized in that**
the operating gesture comprises a pushing or pulling gesture by a hand of a user, wherein the operating gesture is carried out in particular with a closed or open hand.

7. Method according to any one of the preceding claims,
**characterized in that**
the operating system has at least a first and a second operating mode; wherein
the output is formed depending on the operating mode; and
a trigger signal is detected, wherein a changeover between the first and second operating mode takes place depending on the trigger signal.

8. Method according to claim 7,
**characterized in that**
the trigger signal is detected when a seat position is changed.

9. Method according to claim 7 or 8,
**characterized in that**
the trigger signal is detected depending on a change in a driving mode of the vehicle.

10. Operating system in a vehicle, comprising
a control unit (8);
a detection unit (4, 5); and
an output unit (3) which is coupled to the control unit (8) and has an output region; wherein
the control unit (8) is designed to generate an output with at least one first operating object and to output it in the output region of the output unit (3); wherein
the first operating object is assigned to a first element of a first hierarchy level of a hierarchically ordered dataset; wherein
the detection unit (4, 5) is designed to detect an operating gesture, wherein the detected operating gesture comprises a direction of movement of an actuation object perpendicular to the output region; and
the control unit (8) is further designed to change the output depending on the direction of movement of the operating gesture such that the first operating object is replaced by a second operating object; wherein
the second operating object is assigned to a second hierarchy level of the hierarchically organized database,
**characterized in that**
when changing the output, a movement of the first operating object in the direction of movement of the operating gesture is output in perspective; wherein
by means of the operating gesture, a virtual arrangement of the first operating object is spatially shifted.

## Revendications

1. Procédé pour faire fonctionner un système de commande utilisateur dans un véhicule, dans lequel
une sortie comportant au moins un premier objet de commande utilisateur est générée et est fournie dans une zone de sortie ; dans lequel
le premier objet de commande utilisateur est associé à un premier élément d'un premier niveau hiérarchique d'une base de données ordonnée hiérarchiquement ;
un geste de commande utilisateur est détecté, dans lequel le geste de commande utilisateur détecté comprend une direction de déplacement d'un objet d'actionnement perpendiculaire à la zone de sortie ; et
la sortie est modifiée en fonction de la direction de déplacement du geste de commande utilisateur de telle sorte que le premier objet de commande utilisateur est remplacé par un second objet de commande utilisateur ; dans lequel
le second objet de commande utilisateur est associé à un second niveau hiérarchique de la base de données ordonnée hiérarchiquement,
**caractérisé en ce que**
lors de la modification de la sortie, un déplacement du premier objet de commande utilisateur est fourni en perspective dans la direction de déplacement du geste de commande utilisateur ; dans lequel
un agencement virtuel du premier objet de commande utilisateur est déplacé dans l'espace à l'aide du geste de commande utilisateur.

2. Procédé selon la revendication 1,
**caractérisé en ce que**
le déplacement du premier objet de commande utilisateur est fourni dans une représentation tridimensionnelle lors de la modification de la sortie.

3. Procédé selon la revendication 1 ou 2,
**caractérisé en ce que**
le second objet de commande utilisateur est associé, en fonction de la direction de déplacement du geste de commande utilisateur, à un niveau hiérarchique supérieur ou à un niveau hiérarchique inférieur par rapport au niveau hiérarchique du premier objet de commande utilisateur.

4. Procédé selon l'une des revendications précédentes,
**caractérisé en ce que**
la sortie comprend au moins deux premiers objets de commande utilisateur qui sont associés au même niveau hiérarchique et sont disposés en une rangée.

5. Procédé selon l'une des revendications précédentes,
**caractérisé en ce**
**qu'**exactement un premier objet de commande utilisateur de la sortie est marqué comme élément actuellement sélectionné.

6. Procédé selon l'une des revendications précédentes,
**caractérisé en ce que**
le geste de commande utilisateur comprend un geste de poussée ou de traction avec une main d'un utilisateur, dans lequel le geste de commande utilisateur est notamment effectué avec une main fermée ou ouverte.

7. Procédé selon l'une des revendications précédentes,
**caractérisé en ce que**
le système de commande utilisateur présente au moins un premier et un second mode de commande utilisateur ; dans lequel
la sortie est formée en fonction du mode de commande utilisateur ; et
un signal de déclenchement est détecté, dans lequel une modification entre le premier et le seconde mode de commande utilisateur est effectuée en fonction du signal de déclenchement.

8. Procédé selon la revendication 7,
**caractérisé en ce que**
le signal de déclenchement est détecté lors d'une modification d'une position de siège.

9. Procédé selon la revendication 7 ou 8,
**caractérisé en ce que**
le signal de déclenchement est détecté en fonction d'un changement de mode de conduite du véhicule.

10. Système de commande utilisateur dans un véhicule, comprenant
une unité de commande (8) ;
une unité de détection (4, 5) ; et
une unité de sortie (3) couplée à l'unité de commande (8) et comportant une zone de sortie ; dans lequel
l'unité de commande (8) est conçue pour générer une sortie comportant au moins un premier objet de commande utilisateur et la fournir dans la zone de sortie de l'unité de sortie (3) ; dans lequel
le premier objet de commande utilisateur est associé à un premier élément d'un premier niveau hiérarchique d'une base de données ordonnée hiérarchiquement ; dans lequel
l'unité de détection (4, 5) est conçue pour détecter un geste de commande utilisateur, dans lequel le geste de commande utilisateur détecté comprend une direction de déplacement d'un objet d'actionnement perpendiculaire à la zone de sortie ; et
l'unité de commande (8) est en outre conçue pour modifier la sortie en fonction de la direction de déplacement du geste de commande utilisateur de telle sorte que le premier objet de commande utilisateur est remplacé par un second objet de commande utilisateur ; dans lequel
le second objet de commande utilisateur est associé à un second niveau hiérarchique de la base de données ordonnée hiérarchiquement,
**caractérisé en ce que**
lors de la modification de la sortie, un déplacement du premier objet de commande utilisateur est fourni en perspective dans la direction de déplacement du geste de commande utilisateur ; dans lequel
un agencement virtuel du premier objet de commande utilisateur est déplacé dans l'espace à l'aide du geste de commande utilisateur.
